# NEW EUROPEAN PATENT SPECIFICATION

(11) **EP 2 443 935 B2**
(45) Date of publication and mention of the opposition decision: **05.04.2017**
(45) Mention of the grant of the patent: 29.05.2013
(21) Application number: 10188155.5
(22) Date of filing: 20.10.2010
(51) Int. Cl.: A23L 33/10

(54) **Edible product**
Essbares Produkt
Produit comestible

(43) Date of publication of application: 25.04.2012
(73) Proprietor: Fuji Oil Europe, 9042 Gent (BE)
(72) Inventor: Cleenewerck, Bernard, B-8301 Knokke-Heist (BE); Demeurisse, Jeroen, B-9870 Olsene (BE); Vanderlinden, Bart, B-9800 Deinze (BE)
(74) Representative: Caers, Raphael Frans Ivo

(56) References cited:
- EP-A1- 1 491 097
- EP-A1- 1 731 594
- EP-B1- 1 813 155
- WO-A1-2010/055033
- US-A- 4 430 350
- US-A1- 2009 068 318
- www.webmd.com/food-recipes/features/good-fa ts-bad-fats?page=3&print=true
- 'Report of an expert consultation' FATS AND FATTY ACIDS IN HUMAN NUTRITION 14 November 2008, pages 9 - 20
- http://thesaurus.com/browse/admix
- http://www.engineeringtoolbox.com/oil-melti ng-points-d_1088.html
- FIRESTONE D.: 'Physical and Chemical Characteristics of Oils, Fats, and Waxes', 1999, AOCS PRESS, WASHINGTON page 69
- Experimental details of reproduced Example 2, (a)
- GUNSTONE F.D. ET AL: 'The Lipid Handbook', vol. 2, 1994, CHAPMAN & HALL, LONDON pages 60-62,64 - 84-89,97-98,101
- PANTZARIS T.P.: 'Pocketbook of Palm Oil Uses', vol. 5, 2000, MALAYSIAN PALM OIL BOARD, MALAYSIA pages 14 - 19

## Description

The present invention relates to edible products containing fat compositions, containing a substantial amount of a lauric acid containing component, with an improved nutritional profile. The present invention also relates to processes for producing such edible products

### 1. Background of the invention.

Today, lauric fats are used in a large number of food applications, such as confectionery, ice cream, whipping cream, and the like. Lauric fats are characterised by a high content of lauric acid, typically ranging from 40 to 60 wt%, but higher or lower percentages are possible, such as in certain hard or soft fractions derived thereof. The main sources of lauric fats are the fats present in coconut and palm kernel. Apart from their high content of C-12 fatty acids, the lauric fats are further typically characterised by a presence of substantial amounts of C14, C8 and C10 fatty acids, and also a high level of total saturated fatty acids (SAFA) content, which as obtained from their natural sources typically is as high as 80 weight percent, and often even more than 90 percent. The unsaturated fatty acids present are mainly monounsaturated fatty acids (MUFA); any polyunsaturated fatty acid (PUFA) levels are usually below 3%wt. The PUFA are however important because they represent an important class of fatty acids, for which the mammal body has a need, but is unable to synthesize itself.

The fact that lauric fats are used at such large scale in food products may be explained by a whole series of advantages of these fats. First of all the sources are abundantly available, which makes them relative inexpensive fat sources. Lauric fats, especially the stearines derived thereof, may provide a solid structure to food products. They have good melting properties in the mouth thereby giving a sensation of cool melting, because they have a sharp transition from solid to liquid over a narrow temperature range. Lauric fats are also relatively easy to process: they don't require tempering, they have quick crystallisation properties, and there is little or no risk for re-crystallisation. The fact that they contain high amounts of saturated fatty acids makes them also more resistant to oxidation compared to many other oils and fats. Lauric fats may also contain considerable amounts of so-called Medium Chain Fatty Acids (MCFA), a term used for the group of C8 and/or C10 fatty acids, and which are known as quick energy providers: they are usually more readily digested, absorbed and utilised as energy by the body as compared to longer chain fatty acids, and they are less likely to accumulate as body fat.

Lauric fats may bring also a number of disadvantages; the main one being caused by its fatty acid profile: lauric fats are highly saturated and they have a composition which may be considered unbalanced, in that they contain only low levels of MUFA and almost no PUFA. Another disadvantage is their low compatibility with some of the other fats, such as cocoa butter, which is a fat which contains high amounts of symmetrical triglycerides. When confectionery coatings are made with lauric fats, preferably only cocoa ingredients with a very low level of cocoa butter (e.g. cocoa powder having 10-12% fat) may be used, otherwise the coatings may become much too soft.

Oleins of lauric fats, like palm kernel olein, usually containing about 5-8% more MUFA as compared to the source they are derived from, are considered too soft to be used as such in a majority of confectionery products, particularly those which require a hard or semi-hard texture. At room temperature, palm kernel olein contains only about 13 %wt solid fat, compared to the about 40%wt in the original palm kernel oil. This is the reason why mostly these oleins are fully hydrogenated to be used in this application area.

High lauric canola produces a rapeseed oil which typically contains by weight around 39% C12, 4 % C14, 3% C16, 33% C18-1 and 11% C18-2, and which has a typical Iodine Value of 66.2. It contains no or negligible amounts of C8 and C10 fatty acids. It is a source of lauric acid, having a balanced fatty acid composition, but it is too soft for many applications and usually needs to be fully or partially hydrogenated to be fit for use in food products whereby a minimum hardness is required (Inform, Vol 7 no 3 pg 230-243) or it may need to be combined with hard fats like palm stearine or fully hydrogenated liquid oils. High lauric canola is a very scarce agricultural crop compared to the traditional lauric fat sources, coconut oil or palm kernel oil, which are much more abundantly available. High lauric canola is a plant variety which was obtained through genetic modification of the rape plant. This is a very expensive way of making new and nutritionally better balanced sources of lauric acid available. It is also a crop which certain consumers consider non-natural and which they prefer not to use.

The nutritional properties of food products, and of oils and fats in particular, are of increasing importance, in view of the increasing awareness that an unbalanced diet, together with a lack of physical activity, are the main risk factors for the incidence of cardiovascular diseases (CVD), the main cause of mortality in the more developed countries. There is growing evidence of a correlation between the presence of residues of trans fatty acids and saturated fatty acids in the fats in the human diet, and higher cholesterol levels in the blood. There is also growing evidence that different types of saturated fatty acid residues (i.e. differing according to chain length), may have different cholesterogenic effects. An analysis from designed controlled studies was made by H Müller et Al (Lipids, Vol. 36, no 8 pg 783-791 (2001)) and on that basis predictive equations were proposed for total blood cholesterol and for LDL cholesterol levels, associated with the use of particular fatty acid residue types in the diet.

The coefficients found in these equations, are summarised in Table A: a positive coefficient indicating a cholesterol increasing effect, a negative coefficient indicating a cholesterol decreasing effect. In this table a distinction is made between trans fatty acid residues obtained from partially hydrogenated vegetable (V) oil and fish oil (F).

**Table A**

| | Total | LDL |
|---|---|---|
| C12 | 0,01 | 0,01 |
| C14 | 0,12 | 0,071 |
| C16 | 0,057 | 0,047 |
| C18 | 0,00 | 0,00 |
| Trans V | 0,031 | 0,025 |
| Trans F | 0,039 | 0,043 |
| C 18-1 | -0,0044 | -0,0044 |
| C 18-2/3 | -0,017 | -0,017 |

From this table a number of conclusions may be drawn: C14 acid residue has shown the highest hypercholesterolemic effect, 7 to 12 times higher than C12 acid residue. C16 acid residue is situated in between C12 and C14. Stearic acid residue is considered neutral, and MUFA and PUFA are hypocholesterolemic, with the largest effect shown for the PUFA. C8 and C10 fatty acid residues are not mentioned. These are believed to be biologically neutral in this respect (E. A. Emken Proceedings of the World Conference on Lauric Oils, AOCS Press (1994) pg 110-118; C.S. Dayrit ibidem, pg 119- 125).

Other authors have also drawn attention to the fact that different fatty acid residues may have different effects on LDL- and HDL-cholesterol (A. Aro, Lipid Forum Conference on Trans Fatty Acids, Aarhus (Dk) 2003). According to this publication, C14 acid residue increases LDL-cholesterol more than the HDL-type, while the opposite is stated for C12 acid residue. For C16 acid residue, this effect is stated to be even worse than for C14.

In a recent scientific opinion, the European Food Safety Authority states that for the total-to-HDL cholesterol ratio, effects of lauric acid residue are more favourable than carbohydrates (EFSA Journal 2010; 8 (3):1461, p. 37). The positive effect on blood HDL cholesterol is said to decrease with increasing chain length of the saturated fatty acid residue.

These are additional arguments indicating that the effect of C12 acid residue on cholesterol is moderate compared to this of C14 and of C16 acid residues.

Considering the natural lauric oils, primarily coconut and palm kernel oil, in relation to their effects on cholesterol, we conclude that they contain respectively about 11% and 22%wt of hypocholesterolemic fatty acid residues (i.e. MUFA, PUFA), about 18 and 9 %wt of neutral fatty acid residues (i.e. C8, C10, C18-0), about 46-48%wt of fatty acid residues having a moderate hypercholesterolemic effect (i.e. C12) and about 24-27%wt of fatty acid residues having a strong hypercholesterolemic effect (i.e. C14, C16). Hard fractions like palm kernel stearine contain more hypercholesterolemic fatty acid residues; soft fractions like palm kernel olein contain more neutral and hypocholesterolemic fatty acid residues. Coconut and palm kernel oil and especially palm kernel stearine are lauric fats which are abundantly used in structured food products, such as confectionery. They thank their hardness to the fact that they are highly saturated.

When using lauric oils, fractions of lauric oils, modified lauric oils or modified fractions of lauric oils, such as for instance hydrogenated (a.k.a. "hardened") or interesterified products, or fats originating from lauric sources, it is therefore advisable to combine them with a source of unsaturated fatty acid residues, to decrease their total SAFA-level and to balance their fatty acid profile, with the aim of lowering their effect on total and LDL-cholesterol. This can be achieved by incorporation of liquid oils in the product formulation, with the risk however of deteriorating the structure of the final product.

From the above it becomes clear that the application in structured food products of fats and oils which contain high amounts of C8-C12 fatty acid residues but at the same time also contain significant amounts of MUFA and/or PUFA, would widen their use and would offer the consumer the opportunity to better balance his diet. It would be an additional advantage if in such products, liquid oils, as the source of mono- and polyunsaturated fatty acid residues, or other fats having a cholesterol neutral or decreasing effect, could be incorporated without loosing the desired structural properties.

### 2. Prior Art.

The use of interesterified fats in confectionery products like fillings or creams, enrobed with chocolate, is well known. These interesterified fats bring the advantage of preventing fat bloom on the chocolate outer shell surface, which may be caused when part of the filling fat migrates into the chocolate shell. These interesterified fats are typically obtained by first blending a lauric fat with a non-lauric fat containing substantial amounts of palmitic acid residue (C16), followed by random or specific enzymatic interesterification. Examples of such interesterified fats may be found in EP 521549 and EP 671886.

In all the examples of these documents, both the lauric fat, usually palm kernel oil or a fraction thereof, and the palm fat, which may be fractionated or hydrogenated, play a prominent role. The main concern of these publications is to prevent fat bloom. The documents are not concerned with optimising the fat composition in terms of nutritional properties.

An area where we retrieve the same type of interesterified fats in combination with liquid oils and/or olein fractions, is in dough applications in which the baked goods are covered with a chocolate layer, also with the purpose of preventing fat bloom. In such cases, also a third hard fat is usually combined with the interesterified fat and the liquid oil. An example of such fat combination is given in EP-A 824869, whereby a stearin fraction of an interesterified mixture of hardened palm oil with hardened palm kernel oil is combined with palm oil olein and hardened palm oil olein. Similar compositions are described in EP-A 641167, for applications in dough but also in chocolate products and confectionery fillings. Examples 9-11 in EP-A 641167 describe the use of a fat combination of 3 components in confectionery fillings. The first component is an interesterified fat obtained by interesterifying a mixture of hardened palm oil and hardened palm kernel oil, the second liquid component is an olein fraction of palm oil, and the third hard fat is a mid fraction obtained from palm oil fractionation. These filling fat compositions contain high amounts of palmitic acid.

EP-A-923874 is directed to low lauric fat blends suitable for confectionery coatings, preferably containing no tropical fats, which are characterised by a C12:0 and/or C14:0 fatty acid residue content in the range from 10 to 30 wt%, the sum of C16-0 and C18-0 fatty acid residues being in the range from 20 to 80 wt%, and a C18-1 fatty acid residue content in the range from 10 to 50 wt%, while the weight ratio of C18-0/C16-0 fatty acid residues in the blend ranges from 2 to 7. The solid fat content at 20°C, as defined by NMR-pulse, is preferably more than 50, because lower values at 20°C would make the coatings unsuitable at room temperature. The solid fat content at 35°C is preferably less than 20 wt to obtain the required mouthfeel. In the examples it is demonstrated how such coating fats may be prepared: fully or partially hardened liquid oils, such as soybean oil or cottonseed oil, are blended with a fully hardened lauric fat, such as palm kernel stearin or high lauric rapeseed oil, and a liquid oil such as high oleic sunflower, followed by chemical interesterification and fractionation. The midfraction which was obtained is a fat composition according to the main claim. As can be seen from the product characteristics, the obtained fat has a high SFC20 (70 to 78%). The C18/C16 ratio is high because the blend contains no C16 rich fats but high amounts of fully hydrogenated fats as a source of C18-0 (50 to 63 wt%). The blends disclosed in EP-A-923874 all use two at least partially hydrogenated blend components.

US-A-5.288.512 relates to low calorie fats obtained through random interesterification of medium chain fatty acid triglycerides with triglycerides containing saturated long chain fatty acid residues like stearic and behenic acid, followed by a fractionation step. The thus obtained fats consist of mixed triglycerides, containing medium and long chain saturated fatty acid residues. They have a hard texture, but they are fully saturated. Confectionery products made with this fat are also described.

### 3. Object of the invention.

There is thus a need for edible products and food products, which contain fats, not having been obtained through genetic modification, containing a minimum amount of C8 to C12 fatty acid residues and which products contain also other dry ingredients, the products upon consumption being nutritionally better balanced while showing good hardness and texture. There is also a need for triglyceride compositions offering these properties, and which are suitable for use in the edible and/or food products and to a process for producing the edible products and/or the food products.

The present invention aims to obviate or at least mitigate the above described problem and/or to provide improvements generally.

The present invention is concerned with providing such products, which upon consumption have a relatively low effect on LDL-cholesterol but maintain good hardness and texture at the usual consumption temperatures.

It is a further object of this invention to provide a process for the production of such products.

It is also an object of this invention to provide triglyceride compositions for use in the process for producing this edible product.

This is achieved according to the present invention with an edible product showing the technical features of the first claim.

### 4. Detailed description of the invention.

The fatty acid residues present in lauric oils may be subdivided into 4 categories according to their effect on blood cholesterol:
- B-type fatty acid residues associated with a strong and undesirable (B = bad) hypercholesterolemic effect: C14 and C16 fatty acid residues,
- M-type fatty acid residues associated with a moderate (M) hypercholesterolemic effect: C12 fatty acid residue,
- N-type fatty acid residues associated with a neutral (N) effect on cholesterol: C8, C10, and C18-0 fatty acid residues,
- D-type fatty acid residues associated with a cholesterol decreasing effect (D): mono- and poly unsaturated fatty acid residues (MUFA and PUFA).

The traditional lauric oils, such as coconut oil and palm kernel oil, contain more fatty acid residues of the B-type than of the D-type. This effect is even worse for hard fractions of these oils, which are frequently used to make food products with a hard or semi-hard texture. Sources of lauric acid which at the same time contain a higher amount of mono- and poly unsaturated fatty acid residues (D-type) do exist, such as for instance high lauric rapeseed oil, but they are obtained through genetic modification, which is not wanted here, and they are too soft to make structured edible products, so that they need to be hydrogenated to become fit for that purpose.

In order to improve the nutritional quality of oil blends containing lauric fats or oils derived from lauric fats, the aim of the present invention is to increase the level of cholesterol decreasing (D-type) fatty acid residues compared to the original natural lauric fats, such as coconut oil or palm kernel oil. As a preferred target to improve this quality, the total amount of D-type fatty acid residues present is at least 50%wt higher than the amount of hypercholesterolemic (B-type) fatty acid residues present. The saturated fatty acid residues in the fat composition, which are contributing to the structure of the food product, should also consist for less than 50%wt of hypercholesterolemic (B-type) fatty acid residues. At the same time these blends should maintain their capability to build sufficient structure, when incorporated into a food product, and therefore they need a sufficiently high melting point. In general practice this melting point corresponds approximately to the temperature where the fat has a solid fat content (SFC) of 5 wt%. Also with the aim of improving the nutritional quality, the fat and oil blends should in addition have a limited overall content of saturated and trans fatty acid residues.

Therefore the present invention provides an edible product containing, expressed on a total product basis,
a) from 15 to 80 wt % of a triglyceride composition,
b) from 20 to 85 wt % of at least one filler material, and
c) at most 15 wt % of water,
wherein the triglyceride composition contains with respect to the weight of the triglyceride composition
d) from 20 to 70 wt % of saturated fatty acid residues (SAFA),
e) at most 5 wt % of trans unsaturated fatty acid residues (TFA),
f) C8, C10 and C12 fatty acid residues in a weight ratio of (C8+C10+C12)/total SAFA of at least 10%,
g) and whereby the weight ratio of (C8+C10)/C12 fatty acid residues is at least 5%,
h) fatty acid residues in a weight ratio D/B of at least 1.5, whereby D represents the sum of the amounts of all mono- and poly unsaturated fatty acid residues (MUFA and PUFA), and B represents the sum of the amounts of C14 and C16 fatty acid residues, present in the triglyceride composition,
i) whereby the weight ratio of B/total SAFA is at most 0.5,
and whereby the triglyceride composition
j) has an SFC at 20°C of at least 5 wt%, the SFC being measured according to IUPAC method 2.150 a.

In the triglyceride composition according to the present invention, the specification of a minimum amount of (C8+C10+C12) saturated fatty acid residues relative to the total SAFA requires the presence of lauric fat. The ratio of (C8+C10)/C12 fatty acid residues implies that only traditional lauric fats are included, and excludes those derived from genetically modified sources, which contain much smaller amounts of C8 and C10 fatty acid residues. Amongst the long chain saturated fatty acids, stearic acid is clearly preferred above palmitic acid, for the reasons explained above. Therefore it is preferred to use minimum amounts of or even no palm oil or palm oil fractions in the fat composition to be used for making the edible product according to the present invention.

In preferred embodiments of the present invention, the edible product is further characterised by at least one of the following features:
d) the triglyceride composition contains, with respect to the weight of the triglyceride composition, less than 65 wt%, preferably less than 60 wt%, of saturated fatty acid residues,
f) the weight ratio of (C8+C10+C12)/total SAFA is at least 15%, preferably at least 20%,
g) the weight ratio of (C8+C10)/C12 fatty acid residues is at least 12%, preferably at least 20%,
g) the weight ratio D/B is at least 1.7, preferably at least 2.0, most preferably at least 2.5,
i) the weight ratio of B/total SAFA is at most 0.4, preferably at most 0.3, most preferably less than 0.25,
j) the triglyceride composition has an SFC at 20°C of at least 10 wt%, preferably at least 15 wt%, most preferably at least 20 wt%, the SFC being measured according to IUPAC method 2.150 a.

The lower levels of SAFA and the higher D/B and lower B/total SAFA ratios bring better nutritional properties to the products of the present invention. The higher ratio of (C8+C10+C12)/total SAFA implies a higher incorporation level of lauric fats. It is thereby preferred to have more C8 and C10 fatty acid residues than C12 acid residues, and thus a higher (C8+C10)/C12 ratio, because C8 and C10 acid residues have a neutral effect on cholesterol. For this reason coconut oil is preferred over palm kernel oil. It is a further advantage to have a higher SFC at 20°C, in order to be able to achieve a firmer final product structure. It is indeed a prime purpose of the present invention to provide products with a certain minimum hardness. Such products are characterised by a measurable resistance at 20°C when the hardness is measured with a texture meter, for instance the TA-XT2 texture analyser from Stable Micro Systems (SMS), preferably equipped with a cylindrical stainless steel probe, advantageously with a diameter of 3 mm and optionally operated at a speed of 0.5 mm/sec to a penetration depth of preferably 10 mm. Preferably such measurement gives a minimum hardness of 50 g, more preferably more than 100 g.

The edible products of the present invention preferably have further limited water contents, such as at most 10 wt %, preferably at most 5 wt %, more preferably at most 2 wt %, with respect to the total weight of the edible product. Introducing larger amounts of water, such as in margarines, typically leads to different food systems, such as for instance an oil-in-water (O/W) emulsion, whereby usually additives or selected ingredients and special processing techniques are applied to stabilise the emulsion. The edible product according to the present invention therefore is preferably not an emulsion, in particular not a water-in-oil (W/O) emulsion. W/O emulsions, such as margarines, obtain their structure from the specific emulsification and solidification techniques and the use of emulsifiers and thickening agents, and thus have a structure which differs from the structure of the edible product of the present invention. The product according to the present invention does not need to be subjected to such techniques to obtain its structure.

Preferably the edible product according to the invention is a fat continuous product. Within the scope of this invention, fat continuous products are understood to designate products in which the continuous phase is formed by the fat. Examples of such fat continuous products are chocolate fillings and spreads. Baked products or french fries are not to be considered as fat continuous products within the scope of this invention, as the continuous phase of these products is not formed by the fat which it contains.

According to a preferred embodiment, the edible product according to the present invention contains
- from 20 to 75 wt % of the triglyceride composition, preferably from 25 to 60 wt %, more preferably from 30 to 50 wt %, and
- from 25 to 80 wt % of the at least one filler material, preferably from 75 to 40 wt %, more preferably from 70 to 50 wt %.

In this context it is understood, if more than one filler material is present in the edible product, that the sum of all the filler materials present should be in the ranges as specified.

The amount of fat present in the product should be sufficient to build a fat-continuous product, and to give the appropriate and desired sensorial properties; it should also not be too high as fat is responsible for a high energy content, and more fat thus may lead to a product which is considered less healthy.

It is further preferred that the edible product according to the present invention and the triglyceride composition therein comprise at least one hard or semi hard fat component and at least one liquid component, the liquid component being at least one liquid oil or a mixture of two or more liquid oils. A hard or semi-hard fat is defined as a fat which is a solid or semi-solid fat at room temperature (23°C), preferably with a melting point of at least 25°C. A semi-solid fat is defined as a fat which at room temperature contains a visible part of solid fat together with a visible part of liquid oil. A liquid oil is defined as an oil which is fully liquid at room temperature.

Preferably in the triglyceride composition and/or the edible product according to the present invention, the amount of the hard or semi-hard fat component is present in the range from 10-90 wt %, preferably from 25-70 wt %, more preferably from 35-65 wt % and the amount of the liquid oil component is present in the range from 10-90 wt %, preferably 30-75 wt %, more preferably 35-65 wt %, all ranges with respect to the weight of the triglyceride composition. The amounts of the hard or semi-hard fat component and liquid oil component may vary, mainly depending on the hardness of the hard or semi-hard fat component which is chosen, and also depending on the desired hardness of the final edible product.

If a liquid oil is chosen as liquid component or part of the liquid component, then this liquid oil is preferably a vegetable oil selected from the group of rapeseed oil, corn oil, soy oil, sunflower seed oil, cotton seed oil, maize oil, olive oil, hazelnut oil, groundnut oil, a liquid oil rich in medium chain fatty acid residues (MCFA), liquid fractions of palm oil or of shea butter, a blend of two or more of these liquid oils as well as interesterified blends of these liquid oils and/or fractions thereof. This also includes varieties of these liquid oils, such as for instance, but not limited to, high oleic sunflower oil and high oleic rapeseed oil. The liquid oil or the majority of the liquid oil may be added to the recipe as an oil component, but it may also be an oil which is part of a filler material, such as the oil which may be contained in ground nuts or seeds.

As hard fat or semi-hard fat component in embodiments of the present invention, preferably a fat may be used with a melting point of at least 25°C, preferably at least 27°C, most preferably at least 30°C. The use of such fats brings the advantage that it favorably affects the heat stability of the final product.

A preferred type of hard or semi-hard fat component is a fat which contains at least 50 wt %, preferably at least 60 wt %, more preferably at least 70 wt % of SUS-triglycerides with respect to the weight of the hard or semi-hard fat component, wherein S represents a saturated fatty acid residue having 16-18 carbon atoms and U represents an unsaturated fatty acid residue having 18 or more carbon atoms. A better structure with stronger oil retention capacity may be obtained with SUS-triglycerides being present in the edible product according to the invention. Therefore the hard fat component contained therein preferably contains the specified amounts of SUS-triglycerides with respect to the weight of the hard or semi-hard fat component. The inventors have found that a stronger structure could be obtained with higher SUS-contents, and that this is achievable even for products containing only moderate levels of saturated fatty acid residues.

Preferred sources of such type of SUS fats are vegetable oils selected from the group of shea butter or shea stearine, sal fat or sal stearine, illipe butter, or enzymatically prepared fat, or a blend of two or more of the afore mentioned oils and/or fractions thereof, since these sources are easily commercially available.

According to a preferred embodiment, the edible product according to the present invention contains a triglyceride composition which comprises at least 2, and optionally 3 fat components A, B and C, of which the respective amounts are present, with respect to the weight of the triglyceride composition, in the following ranges:
from 10 % to 90 % of fat component A,
from 90 % to 10 % of fat component B,
from 0 % to 80 % of fat component C,
and whereby
- fat component A is a fat selected from the group consisting of shea butter, illipe butter, sal fat, enzymatically prepared StOSt-fat (St representing stearic acid), or fractions thereof,
- fat component B is a fat selected from the group consisting of palm kernel oil, coconut oil, babassu oil, and fractions thereof, and
- fat component C is a liquid oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, a liquid oil rich in medium chain fatty acids (MCFA), and liquid fractions of palm oil or shea butter.

At least one of the fat components A, B and C may be interesterified, or alternatively 2 of the 3 components may be co-interesterified, or alternatively all 3 components may be co-interesterified. The applicants have found that such interesterification, which may be either a complete randomization or only a partial interesterification, and which may be performed using a chemical or an enzymatic method, is that the interesterification may lead to a product with a firmer structure, while maintaining a well balanced fatty acid or fatty acid residue profile with respect to its nutritional properties. A further advantage may be an improved crystallisation speed of the fat.

The hard fat or semi-hard fat component present in the edible product according to the present invention, may also comprise at least one vegetable oil selected from the group consisting of stearin fractions of lauric fats, interesterified lauric fats or stearin fractions of interesterified lauric fats, the lauric fats being palm kernel oil, coconut oil, babassu oil, blends of two or more of these oils and fractions thereof. Hard fractions of lauric oils bring the advantage of contributing a cool melting sensation in the mouth, when the product is eaten.

In an embodiment of the present invention, the edible product preferably contains a triglyceride composition which is substantially free of hydrogenated fat components. The consumer prefers non-hydrogenated products because these are considered as being more natural. Also the consumer believes that hydrogenated products contain higher amounts of trans fatty acid residues, which is particularly valid for the partially hydrogenated products.

The filler material used in the edible product of the present invention usually is a non-glyceride, edible solid material. A conventional filler material comprises at least one component selected from the group consisting of sugar, flour, starch, skimmed milk powder, whole milk powder, whey powder, cocoa powder, coffee powder, food grade organic and inorganic solid powders, and blends of two or more of these. Typically the filler material is a powdery product having an average particle size of at most 500 µm, preferably at most 250 µm, most preferably at most 100 µm. The average particle size hereby is based on the number of particles and not on their weight. A smaller particle size facilitates the blending with the fat to obtain a homogeneous product; it improves the structure of the end product, and this at a minimum risk for having a sensing of graininess upon eating. However, other fillers considered suitable by the person skilled in the art may be used as well.

The edible product according to the present invention may take any form considered suitable by the person skilled in the art, for example it may be a confectionery composition, in particular a cream, a coating, a tablet, a filling, a filled chocolate product, a non-emulsified spread, a culinary product, a solid fat ingredient for food products, soft cheese, or any other edible product known to the person skilled in the art. This also includes food products which are stored below room temperature and are typically consumed at such temperature, for example between 0 and 10°C, for example products which are stored in the refrigerator and are consumed at refrigerator temperature.

The edible product according to the present invention may be used in the production of further food products such as for example those selected from the group consisting of a filled chocolate product, a biscuit coated with a cream layer wherein the cream layer as such may optionally be further coated with a coating, a biscuit having a cream layer sandwiched between two or more biscuit layers, extruded products with an interior structured filling, baked products with a structured filling, filled or topped confectionery products, filled or topped culinary products, and any other food product known to the person skilled in the art.

The present invention also provides the use for producing the edible product according to the present invention of a triglyceride composition containing
d) from 20 to 70 wt % of saturated fatty acid residues (SAFA),
e) at most 5 wt % of trans unsaturated fatty acid residues (TFA)
f) C8, C10 and C12 fatty acid residues in a weight ratio of (C8+C10+C12)/total SAFA of at least 10%,
g) and whereby the weight ratio of (C8+C10)/C12 fatty acid residues is at least 5%,
h) fatty acid residues in a weight ratio D/B of at least 1.5, whereby D represents the sum the amounts of all mono- and poly unsaturated fatty acid residues (MUFA and PUFA), and B represents the sum of the amounts of C14 and C16 fatty acid residues, present in the triglyceride composition,
i) whereby the weight ratio of B/total SAFA of less than 0.5,
and whereby the triglyceride composition
j) has an SFC at 20°C of at least 5 wt%, the SFC being measured according to IUPAC method 2.150 a.

The present invention further provides the use of the triglyceride composition according to the present invention for the production of a food product selected from the group consisting of confectionery compositions, in particular a cream, a coating, a tablet, a filling, a filled chocolate product, a biscuit coated with a cream layer wherein the cream layer as such may optionally be further coated with a coating, a biscuit having a cream layer sandwiched between two or more biscuit layers, non-emulsified spreads, culinary products, solid fat ingredients for food products, soft cheese, extruded products with an interior structured filling, baked products with a structured filling, and food products which are typically stored below room temperature and consumed at such temperature, for example between 0 and 10°C, for example products stored in the refrigerator and consumed at refrigerator temperature.

For producing the edible product of the present invention, several processes may suitably be used. However, the process for producing the above-described edible product, which preferably is a structured fat continuous edible product, preferably comprises the steps of blending
- from 15 to 80 wt % of a triglyceride composition being in an at least partly molten form,
- from 20 to85 wt % of at least one filler material, and
- at most 15 wt % of water.

Although the triglyceride composition may be blended with the other ingredients in a partly molten form, it is preferable that the triglyceride composition is in a completely liquid form when it is being added to the other ingredients. Therefore the hard fat component is preferably first molten and blended with the total amount of liquid oil component or with at least an important amount of the liquid oil component, so that the hard fat component may be dissolved before being blended with the filler material. Preferably all of the filler material is added at once, since addition of the filler material in a later stage may induce lump formation.

In a first variant, the process according to the present invention comprises the step of blending at least 2, and optionally 3, different fat components A, B and C, preferably in respective amounts with respect to the weight of the triglyceride composition, which are in the range
from 10 % to 90 % of fat component A
from 90 % to 10 % of fat component B, and
from 0 % to 80 % of fat component C,
and whereby
- fat component A is a fat selected from the group consisting of shea butter, illipe butter, sal fat, enzymatically prepared StOSt-fat (St representing a stearic acid residue O an unsaturated fatty acid residue), and fractions thereof,
- fat component B is a fat selected from the group consisting of palm kernel oil, coconut oil, babassu oil, and fractions thereof, and
- fat component C is a liquid oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, medium chain fatty acid (MCFA) oil, and liquid fractions of palm oil or shea butter.

In an embodiment of this first variant of the process according to the invention, preferably at least one of the fat components A, B or C has been interesterified, or 2 of the 3 fat components have been co-interesterified, or all 3 fat components have been co-interesterified. The applicants have found that this additional step may favourably affect the structure of the edible product being produced. The applicants have found that such interesterification, which may be either a complete randomization or only a partial interesterification, and which may be performed using a chemical or an enzymatic method, is that the interesterification may lead to a product with a firmer structure, while maintaining a well balanced fatty acid or fatty acid residue profile with respect to its nutritional properties. A further advantage may be an improved crystallisation speed of the fat.

In a second variant of the process according to the present invention, the process comprises forming the triglyceride composition by blending at least one hard or semi hard fat component and at least one liquid oil or a blend of two or more liquid oils, the hard or semi-hard fat component being a fat which is solid or semi-solid at room temperature and the at least one liquid oil being liquid at room temperature.

In an embodiment of this second variant of the process according to the present invention, the amount of the hard or semi-hard fat component is preferably present in the blend in the range from 10-90 wt %, preferably from 25-70 wt %, more preferably from 35-65 wt % and the amount of the at least one liquid oil is present in the range from 10-90 wt %, preferably from 30-75 wt %, more preferably from 35-65 wt %, all ranges with respect to the weight of the triglyceride composition. The amounts and particular types of blend components may be suitable chosen in order to achieve the properties desired for the edible product being produced.

In another embodiment of this second variant of the process according to the present invention, the at least one liquid oil preferably comprises at least one vegetable oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, medium chain length fatty acid (MCFA) oil, liquid fractions of palm oil or shea butter, a fraction of one of these liquid oils, blends of two or more of these liquid oils, and any one of these liquid oils, blends or fractions which has been interesterified.

In yet another embodiment of this second variant of the process according to the present invention, the hard or semi-hard fat component preferably has a melting point of at least 25°C, preferably at least 27°C, most preferably at least 30°C. We have found that this favourably affects the heat stability of the final product.

In a further embodiment of this second variant of the process according to the present invention, the hard or semi-hard fat component preferably comprises at least one vegetable oil selected from the group consisting of stearin fractions of lauric fats, interesterified lauric fats or stearin fractions of interesterified lauric fats, the lauric fats being palm kernel oil, coconut oil, babassu oil, blends of two or more of these oils, and fractions thereof. Hard fractions of lauric oils bring the advantage of contributing a cool melting sensation in the mouth, when the product is eaten.

In one more embodiment of this second variant of the process according to the present invention, the hard or semi-hard fat component preferably contains at least 50 wt %, preferably at least 60 wt %, more preferably at least 70 wt % of SUS-triglycerides with respect to the weight of the hard or semi-hard fat component, wherein S represents a saturated fatty acid having 16-18 carbon atoms and U represents an unsaturated fatty acid having 18 or more carbon atoms. The applicants have found that these SUS-triglycerides bring very favourable effects to the structure of the edible product produced. The applicants have found that a better structure with stronger oil retention capacity may be obtained with SUS-triglycerides being present in the edible product according to the invention. Therefore the hard fat component contained therein preferably contains the specified amounts of SUS-triglycerides with respect to the weight of the hard or semi-hard fat component. The inventors have found that a stronger structure could be obtained with higher SUS-contents, and that this is achievable even for products containing only moderate levels of saturated fatty acid residues.

In the embodiment of the second variant of the process wherein the hard or semi-hard fat component contains the specified higher amounts of SUS-triglycerides, the hard or semi-hard fat component preferably comprises at least one vegetable fat selected from the group consisting of shea butter or shea stearine, sal fat or sal stearine, illipe butter, enzymatically prepared fat, a blend of two or more of these fat components and/or fractions thereof. These sources of fat are more readily commercially available, and may thus lead to an economic advantage for the producer of the edible product according to the present invention.

The present invention is also directed to a particular triglyceride composition which is a suitable and preferred intermediate of the second process variant according to the present invention.

The present invention therefore also provides a triglyceride composition, which preferably is substantially free of hydrogenated fat components, preferably containing at least one lauric hard or semi-hard fat component with a melting point of at least 27°C, most preferably at least 30°C, suitable for the production of the edible product according to the present invention, and which contains
d) from 20 to 70 wt % of saturated fatty acid residues (SAFA),
e) at most 5 wt % of trans unsaturated fatty acid residues (TFA),
f) C8, C10 and C12 fatty acid residues in a weight ratio of (C8+C10+C12)/total SAFA of at least 10%,
g) and whereby the weight ratio of (C8+C10)/C12 fatty acid residues is at least 5%,
h) fatty acid residues in a weight ratio D/B of at least 1.5, whereby D represents the sum of the amounts of all mono- and poly unsaturated fatty acid residues (MUFA and PUFA), and B represents the sum of the amounts of C14 and C16 fatty acid residues, present in the triglyceride composition,
i) whereby the weight ratio of B/total SAFA is at most 0.5,
k) at most 33 wt% of stearic acid residues (C18-0), preferably at most 30 wt%, more preferably at most 25 wt%, even more preferably at most 20 wt%, yet more preferably at most 15 wt%, even more preferably at most 10 wt%, yet more preferably at most 7.0, 6.0 or even 5.0 wt% and most preferably at most 4.0 wt%,
and which triglyceride composition
j) has an SFC at 20°C of at least 5 wt%, the SFC being measured according to IUPAC method 2.150 a.

The triglyceride composition according to the present invention is preferably obtained by blending at least one hard or semi hard lauric fat with at least one liquid oil. The applicants have found that preferably the hard or semi hard lauric fat has been interesterified, or the blend with the liquid oil itself is interesterified, because this additional step appears to have a significant favourable effect on the structure of the edible product obtained, and the applicants believe that this is due to the change in molecular structure which favourably appears to affect amongst others the crystallisation properties of the triglyceride composition.

The applicants prefer to limit the amount of stearic acid residues in the triglyceride composition according to the present invention, to the limits specified herein above. This is because the applicants prefer to use C12 as the source of saturated fatty acid residues rather than C18. Natural sources rich in saturated C18 fatty acid residues are scarce and therefore expensive, and the use of a hydrogenated fat as the source of stearic acid residues, which are more abundantly available and thus more economical, bring under several jurisdictions the need for labelling the product as a product containing hydrogenated fats, which label is undesirable because of the risk that it may lead to a negative image with the consumer.

The present invention is further illustrated by the examples and comparative examples given below.

### 5. Examples

All blending ratios, contents and concentrations in this text are given in weight units and weight percent, unless stated otherwise.

### Example 1

Fat blend 1 was prepared by blending 70%wt of interesterified coconut oil with 30%wt of high oleic sunflower oil.

Fat blend 2 was prepared by blending 70%wt coconut oil with 30%wt of high oleic sunflower oil.

The two blends were analysed and the fatty acid residue concentrations and some of the solid fat content (SFC) characteristics of both blends are given in table 1. In this context, SFCnn represents the SFC at nn°C in weight percent, the SFC being measured according to IUPAC method 2.150 a.

**Table 1**

| | Blend 1 | Blend 2 |
|---|---|---|
| C8 | 5.9% | 5.9% |
| C10 | 4.4% | 4.4% |
| C12 | 32.5% | 32.5% |
| C14 | 12.2% | 12.2% |
| C16 | 7.3% | 7.3% |
| C18 | 3.0% | 3.0% |
| C18-1 | 29.7% | 29.7% |
| C18-2 | 4.1% | 4.1% |
| TFA | <0.1% | <0.1% |
| SAFA | 65.2% | 65.2% |
| | | |
| (C8+C10+C12)/SAFA | 66% | 66% |
| D/B | 1.74 | 1.74 |
| B/SAFA | 0.30 | 0.30 |
| (C8+C10)/C12 | 32% | 32% |
| SFC15 | 33.8% | 30.1% |
| SFC20 | 22.8% | 10.5% |

### Example 2

Fat blend 3 was prepared by blending:
- 50%wt of a randomised fat which is a combination of 75 %wt shea stearine and 25%wt of coconut oil, and
- 50%wt of rapeseed oil.

The characteristics of the blend are given in table 2:

**Table 2**

| | Blend 3 |
|---|---|
| C8 | 1.1% |
| C10 | 0.8% |
| C12 | 5.8% |
| C14 | 2.2% |
| C16 | 5.6% |
| C18 | 22.6% |
| C18-1 | 43.3% |
| C18-2 | 11.7% |
| TFA | <0.1% |
| SAFA | 38.2% |
| | |
| (C8+C10+C12)/SAFA | 20% |
| D/B | 7.59 |
| B/SAFA | 0.21 |
| (C8+C10)/C12 | 31% |
| SFC15 | 27.7% |
| SFC20 | 22.3% |

### Example 3

Confectionery fillings 1 to 3 were prepared using the corresponding fat blends 1 to 3, thereby applying the following recipe:

**Table 3**

| | |
|---|---|
| Sugar | 47.0% |
| Fat blend | 22.0% |
| Hazelnut paste | 13.0% |
| Cocoa powder 10/12 | 7.5% |
| Skimmed milk powder | 10.5% |

The fillings prepared with fat blend 1 and 3 are edible products according to the invention. Fat blend 1 is an intermediate triglyceride composition which is also according to the present invention. The filling prepared with fat blend 2, which contained no interesterified fat, ended up as a comparative example, due to its low SFC20 value.

The total triglyceride compositions present in the fillings, which may also be called creams, were analysed and their characteristics were as follows:

**Table 4**

| | Filling 1 | Filling 2 (Comparative) | Filling 3 |
|---|---|---|---|
| C8 | 4.1% | 4.1% | 0.7% |
| C10 | 3.1% | 3.1% | 0.6% |
| C12 | 23.1% | 23.1% | 4.3% |
| C14 | 8.7% | 8.7% | 1.7% |
| C16 | 7.4% | 7.4% | 6.2% |
| C18 | 3.8% | 3.8% | 17.7% |
| C18-1 | 43.8% | 43.8% | 53.4% |
| C18-2 | 5.1% | 5.1% | 10.4% |
| TFA | <0.1% | <0.1% | <0.1% |
| SAFA | 50.3% | 50.3% | 31.24% |
| | | | |
| (C8+C10+C12)/SAFA | 60% | 60% | 18% |
| D/B | 3.04 | 3.04 | 8.49 |
| B/SAFA | 0.32 | 0.32 | 0.25 |
| (C8+C10)/C12 | 31% | 31% | 30% |
| SFC15 | 18.9% | 15.2% | 19.95% |
| SFC20 | 7.54% | 1.36% | 14.87% |

The cream or filling was made by mixing the ingredients, refining the blend on a 3-roll refiner and conching the refined product at 57°C. During the conching, 0.4% of lecithin was added.

Aluminium cups were filled with the cream and cooled during 30' in an incubator of which the temperature was set at 5°C. Subsequently, the filled cups were placed in an incubator set at 20°C, and storage tests were started. After the specified time intervals, the hardness of the creams was measured. The hardness was measured at 20°C by means of an SMS-texture meter, using a probe of 3 mm diameter, a probe penetration speed of 0.5 mm/sec, and to a depth of 10 mm. The hardness results are given in Table 5, and are expressed in grams.

**Table 5**

| | Fat blend 1 | Fat blend 2 | Fat blend 3 |
|---|---|---|---|
| Hardness after 1 day | 34 | 0 | 122 |
| Hardness after 1 week | 39 | 0 | 98 |
| Hardness after 1 month | 85 | 0 | 102 |

### Example 4

Fat blend 4, which is later used to produce a product according to the present invention, was prepared by blending 65%wt of palm kernel stearin with 35%wt of high oleic sunflower oil. A confectionery filling 4 was prepared with this fat blend 4, thereby using the recipe of Table 3 and the preparation method of Example 3.

The composition information and the characteristics of the fat blend 4 and the triglyceride composition in the filling 4 is given in table 6. Fat blend 4 is also an intermediate triglyceride composition according to the present invention.

**Table 6**

| | Fat blend 4 | Filling 4 |
|---|---|---|
| C8 | 1.3% | 0.9% |
| C10 | 1.8% | 1.3% |
| C12 | 35.4% | 25.2% |
| C14 | 14.2% | 10.1% |
| C16 | 7.0% | 7.2% |
| C18 | 2.6% | 3.6% |
| C18-1 | 32.9% | 46.1% |
| C18-2 | 4.0% | 5.0% |
| TFA | <0.1% | <0.1% |
| SAFA | 62.45% | 48.36% |
| | | |
| (C8+C10+C12)/SAFA | 62% | 57% |
| D/B | 1.74 | 2.94 |
| B/SAFA | 0.34 | 0.36 |
| (C8+C10)/C12 | 9% | 9% |
| SFC15 | 48.3% | 29.76% |
| SFC20 | 38.6% | 19.54% |

The filling which was obtained from fat blend 4 had a good texture, as can be seen from the results of the hardness measurements shown in table 7, and it had a nice mouthfeel when tasted.

**Table 7**

| | Fat blend 4 |
|---|---|
| Hardness after 1 day | 294 |
| Hardness after 1 week | 270 |
| Hardness after 1 month | 290 |

### Example 5

A fat blend 5 was prepared, which consisted of:
- 57 wt % of shea stearine with an IV of 36.4, and
- 43 wt % of a medium chain fatty acid (MCFA) oil with the following fatty acid composition: C8: 59.3 wt %, C10 40.2 wt %, C12 0.3 wt %.

A fat blend 6 was prepared consisting of:
- 57 wt % of shea stearine with an IV of 36.4,
- 28 wt % of a medium chain triglyceride oil with the following fatty acid composition: C8: 59.3 wt %, C10 40.2 wt %, C12 0.3 wt %, and
- 15 wt % of high oleic sunflower seed oil with an IV of 87.3.

Fat blend 6 represents a composition used to make a product according to the invention. Fat blend 5 is a comparative example because of the higher SAFA content brought by the higher amount of MCT oil used in the blend. The compositions and characteristics of blends 5 and 6 are given in the table below, whereby the SFCs were also measured according to IUPAC method 2.150 a:

**Table 8**

| | Fat blend 5 | Fat blend 6 |
|---|---|---|
| C8 | 25.5% | 16.6% |
| C10 | 17.3% | 11.3% |
| C12 | 0.1% | 0.1% |
| C14 | 0.0% | 0.0% |
| C16 | 2.6% | 3.2% |
| C18 | 32.5% | 33.0% |
| C18-1 | 18.7% | 31.0% |
| C18-2 | 1.9% | 3.3% |
| TFA | <0.1% | <0.1% |
| SAFA | 78.04% | 64.11% |
| | | |
| (C8+C10+C12)/SAFA | 55% | 44% |
| D/B | 7.88 | 10.86 |
| B/SAFA | 0.03 | 0.05 |
| (C8+C10)/C12 | 428 | 279 |
| SFC15 | 45.53% | 47.12% |
| SFC20 | 40.12% | 39.69% |

As can be seen in this table, blend 6 is a nutritionally improved composition of blend 5, in that it contains a lower amount of SAFA. Both blends are rich in MCFA content (C8 + C10), which are fatty acids which are easily absorbed by the human metabolism without accumulating as body fat.

Using fat blends 5 and 6, confectionery creams were prepared according to the recipe of Table 9:

**Table 9**

| | |
|---|---|
| fat | 40% |
| sugar | 30% |
| Skimmed Milk Powder | 30% |

The cream was prepared by mixing the ingredients, refining the blend on a 3-roll refiner and conching the refined product at 57.6°C. During conching 0.1% of lecithin was added. The cream was then cooled to 29 °C and 0.2 wt. % with respect to the weight of the composition of Chocoseed A was added. Chocoseed A is a product of Fuji Oil containing a minimum working amount of SUS-triglyceride, which is crystallised in the Beta-form. The conched and cooled cream and the Chocoseed were mixed well. Al-cups were filled, after which they were cooled for 30 minutes at 10°C. The filled cups were then put in an incubator at 20°C for 4 days. The texture of the cream was measured at that temperature with an SMS-texture meter, using a probe of 3 mm diameter, a probe speed of 0.5 mm/sec, tp a depth of 10 mm.

The cream prepared using blend 5 showed a texture of 1823g; the cream prepared with blend 6 had a texture of 1733g. There were no signs of any oiling out in any of these products.

The creams were evaluated by a taste panel and both were found to have a firm structure and good melting properties in the mouth.

### Example 6

A fat blend A was prepared by blending 25 wt % of a standard palm kernel oil with 75 wt % of high oleic sunflower oil.

A fat blend B was prepared by chemical interesterification of blend A.

A fat blend C was prepared by blending 25 wt % of a palm kernel stearine having an IV of 7.2, with 75 wt % of high oleic sunflower oil.

With these fat blends, three new fat blends were prepared:
1. Fat blend 7: 36 wt % of an enzymatically prepared SOS-fat with an IV of 33.7 was blended with 64 wt % of blend A.
2. Fat blend 8: 36 wt. % of an enzymatically prepared SOS-fat with an IV of 33.7 was blended with 64 wt % of blend B.
3. Fat blend 9: 36 wt. % of an enzymatically prepared SOS-fat with an IV of 33.7 was blended with 64 wt % of blend C.

The compositions and characteristics of these fat blends are given in the Table 10 below:

**Table 10**

| | Blend 7 | Blend 8 | Blend 9 |
|---|---|---|---|
| C8 | 0.6% | 0.6% | 0.3% |
| C10 | 0.6% | 0.6% | 0.5% |
| C12 | 7.6% | 7.6% | 8.8% |
| C14 | 2.6% | 2.6% | 3.6% |
| C16 | 5.2% | 5.2% | 5.2% |
| C18 | 22.1% | 22.1% | 22.0% |
| C18-1 | 53.8% | 53.8% | 52.2% |
| C18-2 | 6.0% | 6.0% | 5.8% |
| TFA | 0.25% | 0.25% | 0.25% |
| SAFA | 38.6% | 38.6% | 40.44% |
| | | | |
| (C8+C10+C12)/SAFA | 23% | 23% | 24% |
| D/B | 7.65 | 7.65 | 6.59 |
| B/SAFA | 0.20 | 0.20 | 0.22 |
| (C8+C10)/C12 | 15% | 15% | 9% |
| SFC15 | 30,89% | 35,93% | 28,84% |
| SFC20 | 23,3% | 24,23% | 22,57% |

### Example 7

Three confectionery creams, all three according to the invention, were prepared using the fat blends 7, 8 and 9 from Example 6, according to the procedure of example 5 and applying the recipe of Table 11.

**Table 11**

| | |
|---|---|
| fat | 37% |
| sugar | 32% |
| Skimmed Yoghurt Powder | 31% |

Al-cups were filled with the thus obtained creams and stored for one week at 20°C. Then, the hardness of the creams was measured with a texture meter according to the procedure of Example 5. The texture or hardness was as follows:
Sample 7: 559 g
Sample 8: 706 g
Sample 9: 1308 g

Sample 7 had an acceptable structure and showed no signs of oiling out, however sample 8, which was made of the same components, but interesterified, had the advantage of giving a harder texture.

## Claims

1. An edible product containing, expressed on a total product basis,
a) from 15 to 80 wt % of a triglyceride composition,
b) from 20 to 85 wt % of at least one filler material, and
c) at most 15 wt % of water,
wherein the triglyceride composition contains with respect to the weight of the triglyceride composition
d) from 20 to 70 wt % of saturated fatty acid residues (SAFA),
e) at most 5 wt % of trans unsaturated fatty acid residues (TFA),
f) C8, C10 and C12 fatty acid residues in a weight ratio of (C8+C10+C12)/total SAFA of at least 10%,
g) and whereby the weight ratio of (C8+C10)/C12 fatty acid residues is at least 5%,
h) fatty acid residues in a weight ratio D/B of at least 1.5, whereby D represents the sum of the amounts of all mono- and poly unsaturated fatty acid residues (MUFA and PUFA), and B represents the sum of the amounts of C14 and C16 fatty acid residues, present in the triglyceride composition,
i) whereby the weight ratio of B/total SAFA is at most 0.5,
and whereby the triglyceride composition
j) has an SFC at 20°C of at least 5 wt %, the SFC being measured according to IUPAC method 2.150 a.

2. The edible product according to claim 1, further **characterised by** at least one of the following features:
d) the triglyceride composition contains with respect to the weight of the triglyceride composition at most 65 wt %, preferably at most 60 wt % of saturated fatty acid residues,
f) the weight ratio of (C8+C10+C12)/total SAFA is at least 15%, preferably at least 20%,
g) the weight ratio of (C8+C10)/C12 fatty acid residues is at least 12%, preferably at least 20%,
h) the weight ratio D/B is at least 1.7, preferably at least 2.0, most preferably at least 2.5,
i) the weight ratio of B/total SAFA is at most 0.4, preferably at most 0.3, most preferably at most 0.25,
j) the triglyceride composition has an SFC at 20°C of at least 10 wt %, preferably at least 15 wt %, most preferably at least 20 wt %, the SFC being measured according to IUPAC method 2.150 a.

3. The edible product according to claim 1 or 2 containing at most 10 wt % of water, preferably at most 5 wt %, more preferably at most 2 wt %.

4. The edible product according to any one of claims 1-3, which is a fat continuous edible product.

5. The edible product according to any one of claims 1-4, which is not an emulsion.

6. The edible product according to any one of claims 1-5, containing
- from 20 to 75 wt % of the triglyceride composition, preferably from 25 to 60 wt%, more preferably from 30 to 50 wt %, and
- from 25 to 80 wt % of the at least one filler material, preferably from 75 to 40 wt %, more preferably from 70 to 50 wt %.

7. The edible product according to any one of claims 1-6, wherein the triglyceride composition comprises at least one hard or semi hard fat component and at least one liquid oil or a blend of two or more liquid oils, the hard or semi-hard fat component being a fat which is solid or semi-solid at room temperature and the at least one liquid oil being liquid at room temperature.

8. The edible product according to claim 7, wherein the amount of the hard or semi-hard fat component is present in the range from 10-90 wt %, preferably from 25-70 wt %, more preferably from 35-65 wt % and the amount of the at least one liquid oil is present in the range from 10-90 wt %, preferably from 30-75 wt %, more preferably from 35-65 wt %, all ranges with respect to the weight of the triglyceride composition.

9. The edible product according to any one of claims 7-8, wherein the at least one liquid oil comprises at least one vegetable oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, medium chain length fatty acid (MCFA) oil, liquid fractions of palm oil or shea butter, a fraction of one of these liquid oils, blends of two or more of these liquid oils, and any of these liquid oils, blends or fractions which has been interesterified.

10. The edible product according to any one of claims 7-9, wherein the hard or semi-hard fat component has a melting point of at least 25°C, preferably at least 27°C, most preferably at least 30°C.

11. The edible product according to any one of claims 7-10, **characterised in that** the hard or semi-hard fat component comprises at least one vegetable oil selected from the group consisting of stearin fractions of lauric fats, interesterified lauric fats or stearin fractions of interesterified lauric fats, the lauric fats being palm kernel oil, coconut oil, babassu oil, blends of two or more of these oils, and fractions thereof.

12. The edible product according to any one of claims 7-10, wherein the hard or semi-hard fat component contains at least 50 wt %, preferably at least 60 wt %, more preferably at least 70 wt % of SUS-triglycerides with respect to the weight of the hard or semi-hard fat component, wherein S represents a saturated fatty acid having 16-18 carbon atoms and U represents an unsaturated fatty acid having 18 or more carbon atoms.

13. The edible product according to claim 12, wherein the hard or semi-hard fat component comprises at least one vegetable fat selected from the group consisting of shea butter or shea stearine, sal fat or sal stearine, illipe butter, enzymatically prepared fat, a blend of two or more of these fat components and/or fractions thereof.

14. The edible product according to any one of claims 1-6, wherein the triglyceride composition comprises at least 2, and optionally 3, different fat components A, B and C, of which the respective amounts are present, with respect to the weight of the triglyceride composition, in the range
from 10 % to 90 % of fat component A,
from 90 % to 10 % of fat component B, and
from 0 % to 80 % of fat component C,
and whereby
• fat component A is a fat selected from the group consisting of shea butter, illipe butter, sal fat , enzymatically prepared StOSt-fat (St representing a stearic acid residue and O an oleic acid residue), and fractions thereof,
• fat component B is a fat selected from the group consisting of palm kernel oil, coconut oil, babassu oil, and fractions thereof, and
• fat component C is a liquid oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, medium chain fatty acid (MCFA) oil, and liquid fractions of palm oil or shea butter.

15. The edible product according to claim 14, wherein at least one of the fat components A, B or C has been interesterified, or whereby 2 of the 3 fat components have been co-interesterified or whereby all 3 fat components have been co-interesterified.

16. The edible product according to any one of claims 1-15, wherein the triglyceride composition is substantially free of hydrogenated fat components.

17. The edible product according to any one of claims 1-16, wherein the filler material comprises at least one component selected from the group consisting of sugar, flour, starch, skimmed milk powder, whole milk powder, whey powder, cocoa powder, coffee powder, food grade organic solid powders, food grade inorganic solid powders, and blends of two or more of these.

18. The edible product according to any one of claims 1-17, wherein the filler material has an average particle size of at most 500 µm, preferably at most 250 µm, most preferably at most 100 µm.

19. The edible product according to any one of claims 1-18, which is selected from the group consisting of confectionery compositions, in particular a cream, a coating, a tablet, a filling, a filled chocolate product, a non-emulsified spread, a culinary product, solid fat ingredients for food products, soft cheese, products with a typical storage temperature below room temperature, preferably between 0-10°C.

20. A food product containing the edible product according to any one of claims 1-19, the food product being selected from the group consisting of a filled chocolate product, a biscuit coated with a cream layer wherein the cream layer as such may optionally be further coated with a coating, a biscuit having a cream layer sandwiched between two or more biscuit layers, extruded products with an interior structured filling, baked products with a structured filling, filled or topped confectionery products, and filled or topped culinary products.

21. Use for the production of the edible product according to any one of claims 1-19, of a triglyceride composition containing
d) from 20 to 70 wt % of saturated fatty acid residues (SAFA),
e) at most 5 wt % of trans unsaturated fatty acid residues (TFA)
f) C8, C10 and C12 fatty acid residues in a weight ratio of (C8+C10+C12)/total SAFA of at least 10%,
g) and whereby the weight ratio of (C8+C10)/C12 fatty acid residues is at least 5%,
h) fatty acid residues in a weight ratio D/B of at least 1.5, whereby D represents the sum of the amounts of all mono- and poly unsaturated fatty acid residues (MUFA and PUFA), and B represents the sum of amounts of the C14 and C16 fatty acid residues, present in the triglyceride composition,
i) whereby the weight ratio of B/total SAFA is at most 0.5,
and whereby the triglyceride composition
j) has an SFC at 20°C of at least 5 wt%, the SFC being measured according to IUPAC method 2.150 a.

22. The use according to claim 21 for the production of a food product selected from the group consisting of confectionery compositions, in particular a cream, a coating, a tablet, a filling, a filled chocolate product, a biscuit coated with a cream layer wherein the cream layer as such may optionally be further coated with a coating, a biscuit having a cream layer sandwiched between two or more biscuit layers, non-emulsified spreads, culinary products, solid fat ingredients for food products, soft cheese, extruded products with an interior structured filling, baked products with a structured filling, and food products which are typically stored below room temperature and consumed at such temperature.

23. A process for producing the edible product according to any one of claims 1-19, **characterised in that** the process comprises the steps of blending, based on the total edible product composition,
- from 15 to 80 wt % of a triglyceride composition being in an at least partly molten form,
- from 20 to 85 wt % of at least one filler material, and
- at most 15 wt % of water.

24. The process according to claim 23, wherein the triglyceride composition is formed by blending at least 2, and optionally 3, different fat components A, B and C, preferably in respective amounts with respect to the weight of the triglyceride composition, which are in the range
from 10 % to 90 % of fat component A,
from 90 % to 10 % of fat component B, and
from 0 % to 80 % of fat component C,
and whereby
• fat component A is a fat selected from the group consisting of shea butter, illipe butter, sal fat , enzymatically prepared StOSt-fat (St representing stearic acid residue and O representing an unsaturated fatty acid residue), and fractions thereof,
• fat component B is a fat selected from the group consisting of palm kernel oil, coconut oil, babassu oil, and fractions thereof, and
• fat component C is a liquid oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, medium chain fatty acid (MCFA) oil, and liquid fractions of palm oil or shea butter.

25. The process according to claim 24, wherein at least one of the fat components A, B or C has been interesterified, or whereby 2 of the 3 fat components have been co-interesterified or whereby all 3 fat components have been co-interesterified.

26. The process according to claim 23, wherein the triglyceride composition is formed by blending at least one hard or semi hard fat component and at least one liquid oil or a blend of two or more liquid oils, the hard or semi-hard fat component being a fat which is solid or semi-solid at room temperature and the at least one liquid oil being liquid at room temperature.

27. The process according to claim 26, wherein the amount of the hard or semi-hard fat component is present in the blend in the range from 10-90 wt %, preferably from 25-70 wt %, more preferably from 35-65 wt % and the amount of the at least one liquid oil is present in the range from 10-90 wt %, preferably from 30-75 wt %, more preferably from 35-65 wt %, all ranges with respect to the weight of the triglyceride composition.

28. The process according to claim 26 or 27 wherein the at least one liquid oil comprises at least one vegetable oil selected from the group consisting of rapeseed oil, corn oil, soy oil, sunflower seed oil, high oleic sunflower seed oil, high oleic rapeseed oil, cotton seed oil, maize oil, olive oil, hazelnut oil, groundnut oil, medium chain length fatty acid (MCFA) oil, liquid fractions of palm oil or shea butter, a fraction of one of these liquid oils, blends of two or more of these liquid oils, and any of these liquid oils, blends or fractions which has been interesterified.

29. The process according to any one of claims 26-28, wherein the hard or semi-hard fat component has a melting point of at least 25°C, preferably at least 27°C, most preferably at least 30°C.

30. The process according to any one of claims 26-29, wherein the hard or semi-hard fat component comprises at least one vegetable oil selected from the group consisting of stearin fractions of lauric fats, interesterified lauric fats or stearin fractions of interesterified lauric fats, the lauric fats being palm kernel oil, coconut oil, babassu oil, blends of two or more of these oils, and fractions thereof.

31. The process according to any one of claims 26-29, wherein the hard or semi-hard fat component contains at least 50 wt %, preferably at least 60 wt %, more preferably at least 70 wt % of SUS-triglycerides with respect to the weight of the hard or semi-hard fat component, wherein S represents a saturated fatty acid having 16-18 carbon atoms and U represents an unsaturated fatty acid having 18 or more carbon atoms.

32. The process according to claim 31, wherein the hard or semi-hard fat component comprises at least one vegetable fat selected from the group consisting of shea butter or shea stearine, sal fat or sal stearine, illipe butter, enzymatically prepared fat, a blend of two or more of these fat components and/or fractions thereof.

33. A triglyceride composition containing at least one lauric hard or semi-hard fat component having a melting point of at least 27°C, most preferably at least 30°C, suitable for the production of the edible product according to any one of claims 1-19, **characterised in that** the triglyceride composition contains
d) from 20 to70 wt % of saturated fatty acid residues (SAFA),
e) at most 5 wt % of trans unsaturated fatty acid residues (TFA),
f) C8, C10 and C12 fatty acid residues in a weight ratio of (C8+C10+C12)/total SAFA of at least 10%,
g) and whereby the weight ratio of (C8+C10)/C12 fatty acid residues is at least 5%,
h) fatty acid residues in a weight ratio D/B of at least 1.5, whereby D represents the sum of the amounts of all mono- and poly unsaturated fatty acid residues (MUFA and PUFA), and B represents the sum of the amounts of C14 and C16 fatty acid residues, present in the triglyceride composition,
i) whereby the weight ratio of B/total SAFA is at most 0.5,
k) at most 33 wt% of stearic acid residues,
and which triglyceride composition
j) has an SFC at 20°C of at least 5 wt %, the SFC being measured according to IUPAC method 2.150 a.

34. The triglyceride composition according to claim 33, which is substantially free of hydrogenated fat components.

## Patentansprüche

1. Essbares Produkt enthaltend, auf einer Gesamtproduktbasis ausgedrückt,
a) 15 bis 80 Gew.-% einer Triglyceridzusammensetzung,
b) 20 bis 85 Gew.-% mindestens eines Füllstoffmaterials und
c) höchstens 15 Gew.-% Wasser,
wobei die Triglyceridzusammensetzung Folgendes mit Bezug auf das Gewicht der Triglyceridzusammensetzung enthält
d) 20 bis 70 Gew.-% Reste gesättigter Fettsäure (SAFA),
e) höchstens 5 Gew.-% Reste ungesättigter trans-Fettsäure (TFA),
f) Reste von C8-, C10- und C12-Fettsäuren in einem Gewichtsverhältnis von (C8+C10+C12)/Gesamt-SAFA von mindestens 10 %,
g) und wobei das Gewichtsverhältnis von (C8+C10)/C12-Fettsäureresten mindestens 5 % beträgt,
h) Fettsäurereste in einem Gewichtsverhältnis D/B von mindestens 1,5, wobei D die Summe der Mengen aller Reste von mono- und polyungesättigten Fettsäuren (MUFA und PUFA) darstellt und B die Summe der Mengen an Resten von C14- und C16-Fettsäuren darstellt, die in der Triglyceridzusammensetzung vorliegen,
i) wobei das Gewichtsverhältnis von B/Gesamt-SAFA höchstens 0,5 beträgt,
und wobei die Triglyceridzusammensetzung
j) einen Festfettgehalt (SFC) bei 20 °C von mindestens 5 Gew.-% aufweist, wobei der SFC der IUPAC-Methode 2.150 a gemäß gemessen wird.

2. Essbares Produkt nach Anspruch 1, des Weiteren durch mindestens eines der folgenden Merkmale gekennzeichnet:
d) die Triglyceridzusammensetzung enthält, mit Bezug auf das Gewicht der Triglyceridzusammensetzung, höchstens 65 Gew.-%, bevorzugt höchstens 60 Gew.-% Reste gesättigter Fettsäure,
f) das Gewichtsverhältnis von (C8+C10+C12)/Gesamt-SAFA beträgt mindestens 15 %, bevorzugt mindestens 20 %,
g) das Gewichtsverhältnis von (C8+C10)/C12-Fettsäureresten beträgt mindestens 12 %, bevorzugt mindestens 20 %,
h) das Gewichtsverhältnis D/B beträgt mindestens 1,7, bevorzugt mindestens 2,0, am bevorzugtesten mindestens 2,5,
i) das Gewichtsverhältnis von B/Gesamt-SAFA beträgt höchstens 0,4, bevorzugt höchstens 0,3, am bevorzugtesten höchstens 0,25,
j) die Triglyceridzusammensetzung weist einen SCF bei 20 °C von mindestens 10 Gew.-%, bevorzugt mindestens 15 Gew.-%, am bevorzugtesten mindestens 20 % auf, wobei der SCF der IUPAC-Methode 2.150 a gemäß gemessen wird.

3. Essbares Produkt nach Anspruch 1 oder 2, enthaltend höchstens 10 Gew.-%, bevorzugt höchstens 5 Gew.-%, noch bevorzugter höchstens 2 Gew.-% Wasser.

4. Essbares Produkt nach einem der Ansprüche 1 - 3, das ein fettkontinuierliches essbares Produkt ist.

5. Essbares Produkt nach einem der Ansprüche 1 - 4, das keine Emulsion ist.

6. Essbares Produkt nach einem der Ansprüche 1 - 5, enthaltend
- 20 bis 75 Gew.-%, bevorzugt 25 bis 60 Gew.-%, noch bevorzugter 30 bis 50 Gew.-% der Triglyceridzusammensetzung und
- 25 bis 80 Gew.-%, bevorzugt 75 bis 40 Gew.-%, noch bevorzugter 70 bis 50 Gew.-% des mindestens einen Füllstoffmaterials.

7. Essbares Produkt nach einem der vorhergehenden Ansprüche 1 - 6, wobei die Triglyceridzusammensetzung mindestens eine harte oder halbharte Fettkomponente und mindestens ein flüssiges Öl oder eine Mischung von zwei oder mehreren flüssigen Ölen umfasst, wobei die harte oder halbharte Fettkomponente ein Fett ist, das bei Raumtemperatur fest oder halbfest ist und das mindestens eine flüssige Öl bei Raumtemperatur flüssig ist.

8. Essbares Produkt nach Anspruch 7, wobei die Menge der harten oder halbharten Fettkomponente im Bereich von 10 - 90 Gew.-%, bevorzugt 25 - 70 Gew.-%, noch bevorzugter 35 - 65 Gew.-% vorliegt und die Menge des mindestens einen flüssigen Öls im Bereich von 10 - 90 Gew.-%, bevorzugt 30 - 75 Gew.-% noch bevorzugter 35 - 65 Gew.-% vorliegt, wobei alle Bereich auf das Gewicht der Triglyceridzusammensetzung bezogen sind.

9. Essbares Produkt nach einem der Ansprüche 7 - 8, wobei das mindestens eine flüssige Öl mindestens ein Pflanzenöl umfasst ausgewählt aus der Gruppe bestehend aus Rapsöl, Maisöl, Sojaöl, Sonnenblumenkernöl, Sonnenblumenkernöl von hohem Ölsäuregehalt, Rapsöl von hohem Ölsäuregehalt, Baumwollsamenöl, Maisöl, Olivenöl, Haselnussöl, Erdnussöl, Öl von Fettsäure mittlerer Kettenlänge (MCFA), flüssigen Fraktionen von Palmöl oder Sheabutter, einer Fraktion eines dieser flüssigen Öle, Mischungen von zwei oder mehreren dieser flüssigen Öle und irgendwelchen dieser flüssigen Öle, Mischungen oder Fraktionen, die interverestert worden sind.

10. Essbares Produkt nach einem der Ansprüche 7 - 9, wobei die harte oder halbharte Fettkomponente einen Schmelzpunkt von mindestens 25 °C, bevorzugt mindestens 27 °C, am bevorzugtesten mindestens 30 °C aufweist.

11. Essbares Produkt nach einem der Ansprüche 7 - 10, **dadurch gekennzeichnet, dass** die harte oder halbharte Fettkomponente mindestens ein Pflanzenöl umfasst ausgewählt aus der Gruppe bestehend aus Stearinfraktionen von Laurinfetten, interveresterten Laurinfetten oder Stearinfraktionen von interveresterten Laurinfetten, wobei die Laurinfette Palmkernöl, Kokosnussöl, Babassuöl, Mischungen von zwei oder mehreren dieser Öle und Fraktionen davon sind.

12. Essbares Produkt nach einem der Ansprüche 7 - 10, wobei die harte oder halbharte Fettkomponente mindestens 50 Gew.-%, bevorzugt mindestens 60 Gew.-%, noch bevorzugter mindestens 70 Gew.-% SUS-Triglyceride mit Bezug auf das Gewicht der harten oder halbharten Komponente enthält, wobei S eine gesättigte Fettsäure darstellt, die 16 - 18 Kohlenstoffatome aufweist, und U eine ungesättigte Fettsäure darstellt, die 18 oder mehr Kohlenstoffatome aufweist.

13. Essbares Produkt nach Anspruch 12, wobei die harte oder halbharte Fettkomponente mindestens ein Pflanzenfett umfasst ausgewählt aus der Gruppe bestehend aus Sheabutter oder Sheastearin, Salfett oder Salstearin, Illipébutter, enzymatisch hergestelltem Fett, einer Mischung von zwei oder mehreren dieser Fettkomponenten und/oder Fraktionen davon.

14. Essbares Produkt nach einem der Ansprüche 1 - 6, wobei die Triglyceridzusammensetzung mindestens 2 und wahlweise 3 verschiedene Fettkomponenten A, B und C umfasst, von denen die entsprechenden Mengen mit Bezug auf das Gewicht der Triglyceridzusammensetzung im, Bereich vorliegen
von 10 % bis 90 % der Fettkomponente A,
von 90 % bis 10 % der Fettkomponente B und
von 0 % bis 80 % der Fettkomponente C,
und wobei
• die Fettkomponente A ein Fett ist ausgewählt aus der Gruppe bestehend aus Sheabutter, Illipebutter, Salfett, enzymatisch hergestelltem StOSt-Fett (wobei St einen Stearinsäurerest und O einen Ölsäurerest darstellt) und Fraktionen davon,
• die Fettkomponente B ein Fett ist ausgewählt aus der Gruppe bestehend aus Palmkernöl, Kokosnussöl, Babassuöl und Fraktionen davon und
• die Fettkomponente C ein flüssiges Öl ist ausgewählt aus der Gruppe bestehend aus Rapsöl, Maisöl, Sojaöl, Sonnenblumenkernöl, Sonnenblumenkernöl von hohem Ölsäuregehalt, Rapsöl von hohem Ölsäuregehalt, Baumwollsamenöl, Maisöl, Olivenöl, Haselnussöl, Erdnussöl, Öl von Fettsäure mittlerer Kettenlänge (MCFA) und flüssigen Fraktionen von Palmöl oder Sheabutter.

15. Essbares Produkt nach Anspruch 14, wobei mindestens eine der Fettkomponenten A, B oder C interverestert worden ist oder wobei 2 der 3 Fettkomponenten co-interverestert worden sind oder wobei alle 3 Fettkomponenten co-interverestert worden sind.

16. Essbares Produkt nach einem der Ansprüche 1 - 15, wobei die Triglyceridzusammensetzung im Wesentlichen frei von hydrierten Fettkomponenten ist.

17. Essbares Produkt nach einem der Ansprüche 1 - 16, wobei das Füllstoffmaterial mindestens eine Komponente umfasst ausgewählt aus der Gruppe bestehend aus Zucker, Mehl, Stärke, Magermilchpulver, Vollmilchpulver, Molkepulver, Kakaopulver, Kaffeepulver, organischen festen Pulvern von Nahrungsmittelqualität, anorganischen festen Pulvern von Nahrungsmittelqualität und Mischungen von zwei oder mehreren derselben.

18. Essbares Produkt nach einem der Ansprüche 1 - 17, wobei das Füllstoffmaterial eine durchschnittliche Teilchengröße von höchstens 500 µm, bevorzugt höchstens 250 µm, am bevorzugtesten höchstens 100 µm aufweist.

19. Essbares Produkt nach einem der Ansprüche 1 - 18, das aus der Gruppe ausgewählt ist bestehend aus Konfektzusammensetzungen, insbesondere einer Creme, einer Beschichtung, einer Tablette, einer Füllung, einem gefüllten Schokoladeprodukt, einem nichtemulgierten Aufstrich, einem kulinarischen Produkt, festen Fettzutaten für Nahrungsmittelprodukte, Weichkäse, Produkten mit einer typischen Lagertemperatur unter der Raumtemperatur, bevorzugt zwischen 0 - 10 °C.

20. Nahrungsmittelprodukt enthaltend das essbare Produkt nach einem der Ansprüche 1 - 19, wobei das Nahrungsmittelprodukt aus der Gruppe ausgewählt ist bestehend aus einem gefüllten Schokoladeprodukt, einem mit einer Cremeschicht beschichtetem Keks, wobei die Cremeschicht als solche wahlweise des weiteren mit einer Beschichtung beschichtet sein kann, einem Keks, der eine zwischen zwei oder mehrere Kekslagen eingeschobene Cremeschicht aufweist, extrudierten Produkten mit einer inneren strukturierten Füllung, gebackenen Produkten mit einer strukturierten Füllung, gefüllten oder mit einer Decklage versehenen Konfektprodukten und gefüllten oder mit einer Decklage versehen kulinarischen Produkten.

21. Verwendung, zur Herstellung des essbaren Produkts nach einem der Ansprüche 1 - 19, einer Triglyceridzusammensetzung enthaltend
d) 20 bis 70 Gew.-% Reste gesättigter Fettsäure (SAFA),
e) höchstens 5 Gew.-% Reste ungesättigter trans-Fettsäure (TFA),
f) Reste von C8-, C10- und C12-Fettsäuren in einem Gewichtsverhältnis von (C8+C10+C12)/Gesamt-SAFA von mindestens 10 %,
g) und wobei das Gewichtsverhältnis von (C8+C10)/C12-Fettsäureresten mindestens 5 % beträgt,
h) Fettsäurereste in einem Gewichtsverhältnis D/B von mindestens 1,5, wobei D die Summe der Mengen aller Reste von mono- und polyungesättigten Fettsäuren (MUFA und PUFA) darstellt und B die Summe der Mengen an C14- und C16-Fettsäureresten darstellt, die in der Triglyceridzusammensetzung vorliegen,
i) wobei das Gewichtsverhältnis von B/Gesamt-SAFA höchstens 0,5 beträgt,
und wobei die Triglyceridzusammensetzung
j) einen Festfettgehalt (SFC) bei 20 °C von mindestens 5 Gew.-% aufweist, wobei der SFC der IUPAC-Methode 2.150 a gemäß gemessen wird.

22. Verwendung nach Anspruch 21 zur Herstellung eines Nahrungsmittelprodukts ausgewählt aus der Gruppe bestehend aus Konfektzusammensetzungen, insbesondere einer Creme, einer Beschichtung, einer Tablette, einer Füllung, einem gefüllten Schokoladeprodukt, einem mit einer Cremeschicht beschichten Keks, wobei die Cremeschicht als solche wahlweise des weiteren mit einer Beschichtung beschichtet sein kann, einem Keks, der eine zwischen zwei oder mehrere Keksschichten eingeschobene Cremeschicht aufweist, nichtemulgierten Aufstrichen, kulinarischen Produkten, festen Fettzutaten für Nahrungsmittelprodukte, Weichkäse, extrudierten Produkten mit einer inneren strukturierten Füllung, gebackenen Produkten mit einer strukturierten Füllung und Nahrungsmittelprodukten, die typischerweise bei Temperaturen unter der Raumtemperatur gelagert und bei einer derartigen Temperatur verzehrt werden.

23. Verfahren zur Herstellung des essbaren Produkts nach einem der Ansprüche 1 - 19, **dadurch gekennzeichnet, dass** das Verfahren die Schritte umfasst des Mischens, auf die gesamte essbare Produktzusammensetzung bezogen,
- von 15 bis 80 Gew.-% einer Triglyceridzusammensetzung, die in mindestens teilweise geschmolzener Form vorliegt,
- 20 bis 85 Gew.-% mindestens eines Füllstoffmaterials und
- höchstens 15 Gew.-% Wasser.

24. Verfahren nach Anspruch 23, wobei die Triglyceridzusammensetzung durch Mischen von mindestens 2 und wahlweise 3 verschiedenen Fettkomponenten A, B und C, bevorzugt in jeweiligen Mengen mit Bezug auf das Gewicht der Triglyceridzusammensetzung gebildet wird, die im Bereich liegen von
von 10 % bis 90 % der Fettkomponente A,
90 % bis 10 % der Fettkomponente B und
0 % bis 80 % der Fettkomponente C,
und wobei
• die Fettkomponente A ein Fett ist ausgewählt aus der Gruppe bestehend aus Sheabutter, Illipebutter, Salfett, enzymatisch hergestelltem StOSt-Fett (wobei St einen Stearinsäurerest und O einen ungesättigten Fettsäurerest darstellt) und Fraktionen davon,
• die Fettkomponente B ein Fett ist ausgewählt aus der Gruppe bestehend aus Palmkernöl, Kokosnussöl, Babassuöl und Fraktionen davon und
• die Fettkomponente C ein flüssiges Öl ist ausgewählt aus der Gruppe bestehend aus Rapsöl, Maisöl, Sojaöl, Sonnenblumenkernöl, Sonnenblumenkernöl von hohem Ölsäuregehalt, Rapsöl von hohem Ölsäuregehalt, Baumwollsamenöl, Maisöl, Olivenöl, Haselnussöl, Erdnussöl, Öl von Fettsäure mittlerer Kettenlänge (MCFA) und flüssigen Fraktionen von Palmöl oder Sheabutter.

25. Verfahren nach Anspruch 24, wobei mindestens eine der Fettkomponenten A, B oder C interverestert worden ist oder wobei 2 der 3 Fettkomponenten co-interverestert worden sind oder wobei alle 3 Fettkomponenten co-interverestert worden sind.

26. Verfahren nach Anspruch 23, wobei die Triglyceridzusammensetzung durch Mischen mindestens einer harten oder halbharten Fettkomponente und mindestens eines flüssigen Öls oder einer Mischung von zwei oder mehreren flüssigen Ölen gebildet wird, wobei die harte oder halbharte Fettkomponente ein Fett ist, das bei Raumtemperatur fest oder halbfest ist und das mindestens eine flüssige Öl bei Raumtemperatur flüssig ist.

27. Verfahren nach Anspruch 26, wobei die Menge der harten oder halbharten Fettkomponente in der Mischung im Bereich von 10 - 90 Gew.-%, bevorzugt 25 - 70 Gew.-%, noch bevorzugter 35 - 65 Gew.-% vorliegt und die Menge des mindestens einen flüssigen Öls im Bereich von 10 - 90 Gew.-%, bevorzugt 30 - 75 Gew.-%, noch bevorzugter 35 - 65 Gew.-% vorliegt, wobei alle Bereiche auf das Gewicht der Triglyceridzusammensetzung bezogen sind.

28. Verfahren nach Anspruch 26 oder 27, wobei das mindestens eine flüssige Öl mindestens ein Pflanzenöl umfasst ausgewählt aus der Gruppe bestehend aus Rapsöl, Maisöl, Sojaöl, Sonnenblumenkernöl, Sonnenblumenkernöl von hohem Ölsäuregehalt, Rapsöl von hohem Ölsäuregehalt, Baumwollsamenöl, Maisöl, Olivenöl, Haselnussöl, Erdnussöl, Öl von Fettsäure mittlerer Kettenlänge (MCFA), flüssigen Fraktionen von Palmöl oder Sheabutter, einer Fraktion eines dieser flüssigen Öle, Mischungen von zwei oder mehreren dieser flüssigen Öle und irgendwelchen dieser flüssigen Öle, Mischungen oder Fraktionen, die interverestert worden sind.

29. Verfahren nach einem der Ansprüche 26 - 28, wobei die harte oder halbharte Fettkomponente einen Schmelzpunkt von mindestens 25 °C, bevorzugt mindestens 27 °C, am bevorzugtesten mindestens 30 °C aufweist.

30. Verfahren nach einem der Ansprüche 26 - 29, wobei die harte oder halbharte Fettkomponente mindestens ein Pflanzenöl umfasst ausgewählt aus der Gruppe bestehend aus Stearinfraktionen von Laurinfetten, interveresterten Laurinfetten oder Stearinfraktionen von interveresterten Laurinfetten, wobei die Laurinfette Palmkernöl, Kokosnussöl, Babassuöl, Mischungen von zwei oder mehreren dieser Öle und Fraktionen davon sind.

31. Verfahren nach einem der Ansprüche 26 - 29, wobei die harte oder halbharte Fettkomponente mindestens 50 Gew.-%, bevorzugt mindestens 60 Gew.-%, noch bevorzugter mindestens 70 Gew.-% SUS-Triglyceride mit Bezug auf das Gewicht der harten oder halbharten Komponente enthält, wobei S eine gesättigte Fettsäure darstellt, die 16 - 18 Kohlenstoffatome aufweist, und U eine ungesättigte Fettsäure darstellt, die 18 oder mehr Kohlenstoffatome aufweist.

32. Verfahren nach Anspruch 31, wobei die harte oder halbharte Fettkomponente mindestens ein Pflanzenfett umfasst ausgewählt aus der Gruppe bestehend aus Sheabutter oder Sheastearin, Salfett oder Salstearin, Illipebutter, enzymatisch hergestelltem Fett, einer Mischung von zwei oder mehreren dieser Fettkomponenten und/oder Fraktionen davon.

33. Triglyceridzusammensetzung enthaltend mindestens eine harte oder halbharte Laurinfettkomponente, die einen Schmelzpunkt von mindestens 27 °C, am bevorzugtesten mindestens 30 °C aufweist, und zur Herstellung des essbaren Produkts nach einem der Ansprüche 1 - 19 geeignet ist, **dadurch gekennzeichnet, dass** die Triglyceridzusammensetzung Folgendes enthält
d) 20 bis 70 Gew.-% Reste gesättigter Fettsäure (SAFA),
e) höchstens 5 Gew.-% Reste ungesättigter trans-Fettsäure (TFA),
f) Reste von C8-, C10- und C12-Fettsäuren in einem Gewichtsverhältnis von (C8+C10+C12)/Gesamt-SAFA von mindestens 10 %,
g) und wobei das Gewichtsverhältnis von (C8+C10)/C12-Fettsäureresten mindestens 5 % beträgt,
h) Fettsäurereste in einem Gewichtsverhältnis D/B von mindestens 1,5, wobei D die Summe der Mengen aller Reste von mono- und polyungesättigten Fettsäuren (MUFA und PUFA) darstellt und B die Summe der Mengen und C14- und C16-Fettsäurereste darstellt, die in der Triglyceridzusammensetzung vorliegt,
i) wobei das Gewichtsverhältnis von B/Gesamt-SAFA höchstens 0,5 beträgt,
und wobei die Triglyceridzusammensetzung
j) einen Festfettgehalt (SFC) bei 20 °C von mindestens 5 Gew.-% aufweist, wobei der SFC der IUPAC-Methode 2.150 a gemäß gemessen wird.

34. Triglyceridzusammensetzung nach Anspruch 33, die im Wesentlichen von hydrierten Fettkomponenten frei ist.

## Revendications

1. Produit comestible contenant, exprimé sur une base totale du produit,
a) de 15 à 80 % en poids d'une composition de triglycérides,
b) de 20 à 85 % en poids d'au moins une matière de charge, et
c) au maximum 15 % en poids d'eau,
dans lequel la composition de triglycérides contient par rapport au poids de la composition de triglycérides
d) de 20 à 70 % en poids de résidus d'acides gras saturés (AGS),
e) au maximum 5 % en poids de résidus d'acides gras insaturés trans (AGT),
f) des résidus d'acides gras C8, C10 et C12 dans un rapport pondéral de (C8+C10+C12) / AGS totaux d'au moins 10 %,
g) et le rapport pondéral des résidus d'acides gras (C8+C10) / C12 étant d'au moins 5%,
h) des résidus d'acides gras dans un rapport pondéral D/B d'au moins 1,5, D représentant la somme des quantités de tous les résidus d'acides gras mono-insaturés et poly-insaturés (AGMI et AGPI), et B représentant la somme des quantités de résidus d'acides gras C14 et C16, présents dans la composition de triglycérides,
i) le rapport pondéral de B / AGT totaux étant au maximum de 0,5,
et la composition de triglycérides
j) ayant une SFC à 20° C d'au moins 5 % en poids, la SFC étant mesurée selon la méthode IUPAC 2.150 a.

2. Produit comestible selon la revendication 1, **caractérisé en outre par** au moins une des caractéristiques suivantes:
d) la composition de triglycérides contient par rapport au poids de la composition de triglycérides au maximum 65 % en poids, de préférence au maximum 60 % en poids de résidus d'acides gras saturés,
f) le rapport pondéral de (C8+C10+C12) / AGS totaux est d'au moins 15 %, de préférence d'au moins 20 %,
g) le rapport pondéral de résidus d'acides gras (C8+C10) / C12 est d'au moins 12 %, de préférence d'au moins 20 %,
h) le rapport pondéral D/B est d'au moins 1,7, de préférence d'au moins 2,0, idéalement d'au moins 2,5,
i) le rapport pondéral de B / AGS totaux est au maximum de 0,4, de préférence au maximum de 0,3, idéalement au maximum de 0,25,
j) la composition de triglycérides a une SFC à 20° C d'au moins 10 % en poids, de préférence d'au moins 15 % en poids, idéalement d'au moins 20 % en poids, la SFC étant mesurée selon la méthode IUPAC 2.150 a.

3. Produit comestible selon la revendication 1 ou 2 contenant au maximum 10 % en poids d'eau, de préférence au maximum 5 % en poids, mieux encore au maximum 2 % en poids.

4. Produit comestible selon l'une quelconque des revendications 1 - 3, qui est un produit comestible gras continu.

5. Produit comestible selon l'une quelconque des revendications 1 - 4, qui n'est pas une émulsion.

6. Produit comestible selon l'une quelconque des revendications 1 - 5, contenant
- de 20 à 75 % en poids de la composition de triglycérides, de préférence de 25 à 60 % en poids, mieux encore de 30 à 50 % en poids, et
- de 25 à 80 % en poids de ladite au moins une matière de charge, de préférence de 75 à 40 % en poids, mieux encore de 70 à 50 % en poids.

7. Produit comestible selon l'une quelconque des revendications 1 - 6, dans lequel la composition de triglycérides comprend au moins un composant matière grasse dure ou semi dure et au moins une huile liquide ou un mélange de deux ou de plus de deux huiles liquides, ledit composant matière grasse dure ou semi dure étant une graisse qui est solide ou semi solide à température ambiante et ladite au moins une huile liquide étant liquide à température ambiante.

8. Produit comestible selon la revendication 7, dans lequel la quantité du composant matière grasse dure ou semi dure est présente dans la fourchette de 10 - 90 % en poids, de préférence de 25 - 70 % en poids, mieux encore de 35 - 65 % en poids et la quantité de ladite au moins une huile liquide est présente dans la fourchette de 10 - 90 % en poids, de préférence de 30 - 75 % en poids, mieux encore de 35 - 65 % en poids, toutes les fourchettes par rapport au poids de la composition de triglycérides.

9. Produit comestible selon l'une quelconque des revendications 7 - 8, dans lequel ladite au moins une huile liquide comprend au moins une huile végétale sélectionnée dans le groupe consistant en huile de colza, huile de maïs, huile de soja, huile de graines de tournesol, huile de graines de tournesol à haute teneur en acide oléique, huile de colza à haute teneur en acide oléique, huile de graines de coton, huile de maïs, huile d'olive, huile de noisette, huile d'arachide, huile d'acides gras à chaîne moyenne (AGCM), fractions liquides d'huile de palme ou de beurre de karité, une fraction d'une de ces huiles liquides, des mélanges de deux ou de plus de deux de ces huiles liquides, et un quelconque de ces huiles, mélanges ou fractions liquides qui a été interestérifié.

10. Produit comestible selon l'une quelconque des revendications 7 - 9, dans lequel ledit composant matière grasse dure ou semi dure a un point de fusion d'au moins 25° C, de préférence d'au moins 27° C, idéalement d'au moins 30° C.

11. Produit comestible selon l'une quelconque des revendications 7 - 10, **caractérisé en ce que** le composant matière grasse dure ou semi dure comprend au moins une huile végétale sélectionnée dans le groupe consistant en fractions stéarine de graisses lauriques, graisses lauriques interestérifiées ou fractions stéarine de graisses lauriques interestérifiées, les graisses lauriques étant de l'huile de palmiste, de l'huile de noix de coco, de l'huile de babassu, des mélanges de deux ou de plus de deux de ces huiles, et des fractions de celles-ci.

12. Produit comestible selon l'une quelconque des revendications 7 - 10, dans lequel le composant matière grasse dure ou semi dure contient au moins 50 % en poids, de préférence au moins 60 % en poids, mieux encore au moins 70 % en poids de triglycérides SUS par rapport au poids du composant matière grasse dure ou semi dure, dans lesquels S représente un acide gras saturé ayant 16 - 18 atomes de carbone et U représente un acide gras insaturé ayant 18 atomes de carbone ou plus.

13. Produit comestible selon la revendication 12, dans lequel le composant matière grasse dure ou semi-dure comprend au moins une graisse végétale sélectionnée dans le groupe consistant en beurre de karité ou stéarine de karité, graisse de sal ou stéarine de sal, beurre d'illipe, graisse enzymatiquement préparée, un mélange de deux ou de plus de deux de ces composants matière grasse et/ou des fractions de ceux-ci.

14. Produit comestible selon l'une quelconque des revendications 1 - 6, dans lequel la composition de triglycérides comprend au moins 2, et optionnellement 3, composants matière grasse A, B et C différents dont les quantités respectives sont présentes, par rapport au poids de la composition de triglycérides, dans la fourchette
de 10 % à 90 % du composant matière grasse A,
de 90 % à 10 % du composant matière grasse B, et
de 0 % à 80 % du composant matière grasse C,
et
• le composant matière grasse A étant une graisse sélectionnée dans le groupe consistant en beurre de karité, beurre d'illipe, graisse de sal, graisse StOSt enzymatiquement préparée (St représentant un résidu d'acide stéarique et O un résidu d'acide oléique), et des fractions de ceux-ci,
• le composant matière grasse B étant une graisse sélectionnée dans le groupe consistant en huile de palmiste, huile de noix de coco, huile de babassu, et des fractions de celles-ci, et
• le composant matière grasse C étant une huile liquide sélectionnée dans le groupe consistant en huile de colza, huile de maïs, huile de soja, huile de graines de tournesol, huile de graines de tournesol à haute teneur en acide oléique, huile de colza à haute teneur en acide oléique, huile de graines de coton, huile de maïs, huile d'olive, huile de noisette, huile d'arachide, huile d'acides gras à chaîne moyenne (AGCM), et des fractions liquides d'huile de palme ou de beurre de karité.

15. Produit comestible selon la revendication 14, dans lequel au moins un des composants matière grasse A, B ou C a été interestérifié, ou 2 des 3 composants matière grasse ont été co-interestérifiés ou la totalité des 3 composants matière grasse ont été co-interestérifiés.

16. Produit comestible selon l'une quelconque des revendications 1 - 15, dans lequel la composition de triglycérides est sensiblement exempte de composants graisse hydrogénée

17. Produit comestible selon l'une quelconque des revendications 1 - 16, dans lequel la matière de charge comprend au moins un composant sélectionné dans le groupe consistant en sucre, farine, amidon, lait écrémé en poudre, lait entier en poudre, lactosérum en poudre, cacao en poudre, café en poudre, poudres de solides organiques alimentaires, poudres de solides inorganiques alimentaires et des mélanges de deux ou de plus de deux de ceux-ci.

18. Produit comestible selon l'une quelconque des revendications 1 - 17, dans lequel la matière de charge a une taille moyenne de particule au maximum de 500 µm, de préférence au maximum de 250 µm, idéalement au maximum de 100 µm.

19. Produit comestible selon l'une quelconque des revendications 1 - 18, qui est sélectionné dans le groupe consistant en compositions de confiserie, en particulier une crème, un enrobage, une tablette, un fourrage, un produit chocolaté fourré, une pâte non émulsifiée, un produit culinaire, des ingrédients gras solides pour produits alimentaires, du fromage à pâte molle, des produits ayant une température de stockage typique inférieure à la température ambiante, de préférence entre 0 - 10° C.

20. Produit alimentaire contenant le produit comestible selon l'une quelconque des revendications 1 - 19, le produit alimentaire étant sélectionné dans le groupe consistant en un produit chocolaté fourré, un biscuit recouvert d'une couche de crème, la couche de crème en tant que telle pouvant en outre être recouverte optionnellement d'un enrobage, un biscuit ayant une couche de crème prise en sandwich entre deux couches de biscuit ou plus, des produits extrudés avec un fourrage intérieur structuré, des produits cuits avec un fourrage structuré, des produits de confiserie fourrés ou nappés et des produits culinaires fourrés ou nappés.

21. Emploi pour la production du produit comestible selon l'une quelconque des revendications 1 - 19, d'une composition de triglycérides contenant
d) de 20 à 70 % en poids de résidus d'acides gras saturés (AGS),
e) au maximum 5 % en poids de résidus d'acides gras insaturés trans (AGT)
f) des résidus d'acides gras C8, C10 et C12 dans un rapport pondéral de (C8+C10+C12) / AGS totaux d'au moins 10 %,
g) et le rapport pondéral des résidus d'acides gras (C8+C10) / C12 étant d'au moins 5 %,
h) des résidus d'acides gras dans un rapport pondéral D/B d'au moins 1,5, D représentant la somme des quantités de tous les résidus d'acides gras mono-insaturés et poly-insaturés (AGMI et AGPI), et B représentant la somme des quantités de résidus d'acides gras C14 et C16, présents dans la composition de triglycérides,
i) le rapport pondéral de B / AGT totaux étant au maximum de 0,5,
et la composition de triglycérides
j) ayant une SFC à 20° C d'au moins 5 % en poids, la SFC étant mesurée selon la méthode IUPAC 2.150 a.

22. Emploi selon la revendication 21 pour la production d'un produit alimentaire sélectionné dans le groupe consistant en compositions de confiserie, en particulier une crème, un enrobage, une tablette, un fourrage, un produit chocolaté fourré, un biscuit recouvert d'une couche de crème, la couche de crème en tant que telle pouvant en outre être recouverte optionnellement d'un enrobage, un biscuit ayant une couche de crème prise en sandwich entre deux couches de biscuits ou plus, des pâtes non émulsifiées, des produits culinaires, des ingrédients gras solides pour produits alimentaires, du fromage à pâte molle, des produits extrudés avec un fourrage structuré intérieur, des produits cuits avec un fourrage structuré et des produits alimentaires qui sont typiquement stockés à une température inférieure à la température ambiante et consommés à cette température.

23. Procédé pour produire le produit comestible selon l'une quelconque des revendications 1 - 19, caractérisé en que le procédé comprend les étapes de mélange, sur la base de la composition totale du produit comestible,
- de 15 à 80 % en poids d'une composition de triglycérides dans une forme au moins en partie fondue,
- de 20 à 85 % en poids d'au moins une matière de charge, et
- au maximum 15 % en poids d'eau.

24. Procédé selon la revendication 23, dans lequel la composition de triglycérides est formée en mélangeant au moins 2, et optionnellement 3, composants matière grasse A, B et C différents, de préférence dans des quantités respectives par rapport au poids de la composition de triglycérides, qui sont dans la fourchette
de 10 % à 90 % du composant matière grasse A,
de 90 % à 10 % du composant matière grasse B, et
de 0 % à 80 % du composant matière grasse C,
et
• le composant matière grasse étant une graisse sélectionnée dans le groupe consistant en beurre de karité, beurre d'illipe, graisse de sal, graisse StOSt enzymatiquement préparée (St représentant un résidu d'acide stéarique et O un résidu d'acide oléique), et des fractions de ceux-ci,
• le composant matière grasse B étant une graisse sélectionnée dans le groupe consistant en huile de palmiste, huile de noix de coco, huile de babassu, et des fractions de celles-ci, et
• le composant matière grasse C étant une huile liquide sélectionnée dans le groupe consistant en huile de colza, huile de maïs, huile de soja, huile de graines de tournesol, huile de graines de tournesol à haute teneur en acide oléique, huile de colza à haute teneur en acide oléique, huile de graines de coton, huile de maïs, huile d'olive, huile de noisette, huile d'arachide, huile d'acides gras à chaîne moyenne (AGCM), et des fractions liquides d'huile de palme ou de beurre de karité.

25. Procédé selon la revendication 24, dans lequel au moins un des composants matière grasse A, B ou C a été interestérifié, ou 2 des 3 composants matière grasse ont été co-interestérifiés ou la totalité des 3 composants matière grasse ont été co-interestérifiés.

26. Procédé selon la revendication 23, dans lequel la composition de triglycérides est formée en mélangeant au moins un composant matière grasse dure ou semi dure et au moins une huile liquide ou un mélange de deux ou de plus de deux huiles liquides, ledit composant matière grasse dure ou semi dure étant une graisse qui est solide ou semi solide à température ambiante et ladite au moins une huile liquide étant liquide à température ambiante.

27. Procédé selon la revendication 26, dans lequel la quantité du composant matière grasse dure ou semi dure est présente dans le mélange dans la fourchette de 10 - 90 % en poids, de préférence de 25 - 70 % en poids, mieux encore de 35 - 65 % en poids et la quantité de ladite au moins une huile liquide est présente dans la fourchette de 10 - 90 % en poids, de préférence de 30 - 75 % en poids, mieux encore de 35 - 65 % en poids, toutes les fourchettes par rapport au poids de la composition de triglycérides.

28. Procédé selon la revendication 26 ou 27, dans lequel ladite au moins une huile liquide comprend au moins une huile végétale sélectionnée dans le groupe consistant en huile de colza, huile de maïs, huile de soja, huile de graines de tournesol, huile de graines de tournesol à haute teneur en acide oléique, huile de colza à haute teneur en acide oléique, huile de graines de coton, huile de maïs, huile d'olive, huile de noisette, huile d'arachide, huile d'acides gras à chaîne moyenne (AGCM), fractions liquides d'huile de palme ou de beurre de karité, une fraction d'une de ces huiles liquides, des mélanges de deux ou de plus de deux de ces huiles liquides, et un quelconque de ces huiles, mélanges ou fractions liquides qui a été interestérifié.

29. Procédé selon l'une quelconque des revendications 26 - 28, dans lequel ledit composant matière grasse dure ou semi dure a un point de fusion d'au moins 25° C, de préférence d'au moins 27° C, idéalement d'au moins 30° C.

30. Procédé selon l'une quelconque des revendications 26 - 29, **caractérisé en ce que** le composant matière grasse dure ou semi dure comprend au moins une huile végétale sélectionnée dans le groupe consistant en fractions stéarine de graisses lauriques, graisses lauriques interestérifiées ou fractions stéarine de graisses lauriques interestérifiées, les graisses lauriques étant de l'huile de palmiste, de l'huile de noix de coco, de l'huile de babassu, des mélanges de deux ou de plus de deux de ces huiles, et des fractions de celles-ci.

31. Procédé selon l'une quelconque des revendications 26 - 29, dans lequel le composant matière grasse dure ou semi dure contient au moins 50 % en poids, de préférence au moins 60 % en poids, mieux encore au moins 70 % en poids de triglycérides SUS par rapport au poids du composant matière grasse dure ou semi dure, dans lesquels S représente un acide gras saturé ayant 16 - 18 atomes de carbone et U représente un acide gras insaturé ayant 18 atomes de carbone ou plus.

32. Procédé selon la revendication 31, dans lequel le composant matière grasse dure ou semi-dure comprend au moins une graisse végétale sélectionnée dans le groupe consistant en beurre de karité ou stéarine de karité, graisse de sal ou stéarine de sal, beurre d'illipe, graisse enzymatiquement préparée, un mélange de deux ou de plus de deux de ces composants matière grasse et/ou fractions de ceux-ci.

33. Composition de triglycérides contenant au moins un composant graisse laurique dure ou semi dure ayant un point de fusion d'au moins 27° C, idéalement d'au moins 30° C, convenant pour la production du produit comestible selon l'une quelconque des revendications 1 - 19, **caractérisée en ce que** la composition de triglycérides contient
d) de 20 à 70 % en poids de résidus d'acides gras saturés (AGS),
e) au maximum 5 % en poids de résidus d'acides gras insaturés trans (AGT),
f) des résidus d'acides gras C8, C10 et C12 dans un rapport pondéral de (C8+C10+C12) / AGS totaux d'au moins 10 %,
g) et le rapport pondéral des résidus d'acides gras (C8+C10) / C12 étant d'au moins 5 %,
h) des résidus d'acides gras dans un rapport pondéral D/B d'au moins 1,5, D représentant la somme des quantités de tous les résidus d'acides gras mono-insaturés et poly-insaturés (AGMI et AGPI), et B représentant la somme des quantités de résidus d'acides gras C14 et C16, présents dans la composition de triglycérides,
i) le rapport pondéral de B / AGT totaux étant au maximum de 0,5,
k) au maximum 33 % en poids de résidus d'acides stéariques, et laquelle composition de triglycérides
j) a une SFC à 20° C d'au moins 5 % en poids, la SFC étant mesurée selon la méthode IUPAC 2.150 a.

34. Composition de triglycérides selon la revendication 33, qui est sensiblement exempte de composants graisse hydrogénée.
